(19) Europäisches Patentamt
European Patent Office
Office européen des brevets

(11) EP 0 344 021 B1

(12) EUROPEAN PATENT SPECIFICATION

(45) Date of publication and mention of the grant of the patent:
**07.11.2001 Bulletin 2001/45**

(51) Int Cl.[7]: **C08F 210/08**, C08F 210/14, C08F 8/20
// (C08F210/08, 212:12), (C08F210/14, 212:12)

(21) Application number: **89305395.9**

(22) Date of filing: **26.05.1989**

# (54) Para-alkylstyrene/isoolefin copolymers

Para-Alkylstyren/Isoolefin-Copolymere

Copolymères de para-alkylstyrène et d'isooléfines

(84) Designated Contracting States:
**BE DE ES FR GB IT NL SE**

(30) Priority: **27.05.1988 US 199665**

(43) Date of publication of application:
**29.11.1989 Bulletin 1989/48**

(73) Proprietor: **ExxonMobil Chemical Patents Inc.**
**Florham Park, NJ 07932 (US)**

(72) Inventors:
- **Powers, William Kenneth**
**Berkeley Heights New Jersey 07922 (US)**
- **Wang, Hsien-Chang**
**Edison New Jersey 08820 (US)**

(74) Representative:
**Veldhuizen, Albert Dirk Willem et al**
**ExxonMobil Chemical Europe Inc.**
**Law Technology**
**P.O. Box 105**
**1830 Machelen (BE)**

(56) References cited:
**BE-A- 653 185**

- **SADYKHOV, KHANLAROV: "Cationic low-temperature-Copolymerization of isopropenyltoluene with isobutylene" AZERB. KHIM. ZH., BAKU, no. 2, 1971, pages 57-61, XP002150901**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 344 021 B1

## Description

### FIELD OF THE INVENTION

The present invention relates to copolymers of isobutylene and para-methylstyrene. More particularly, the present invention relates to various functionalized copolymers of isobutylene and para-methylstyrene, and in particular such polymers ranging from tough, glassy polystyrene-like polymers to rubbery ozone-resistant polyisobutylene-like polymers. More particularly, the present invention relates to methods for producing copolymers of isobutylene and para-methylstyrene. Still more particularly, the present invention relates to halogenated copolymers of isobutylene and para-methylstyrene and the use thereof.

### BACKGROUND OF THE INVENTION

The preparation and use of copolymers of styrene and isobutylene is known in the art. Thus, such copolymers ranging from tough, glassy high polystyrene content copolymers for use in plastic blends, to rubbery styrene functionalized isobutylene copolymers, these copolymers have become well known in this art. Styrene and isobutylene have been copolymerized rather readily in the past under cationic polymerization conditions to yield these copolymers covering the entire compositional range. It is also known that blocky or random homogeneous copolymers can be produced by altering the copolymerization conditions, such as shown in Powers, U.S. Patent No. 3,948,868. This patent thus describes the production of random homogeneous polymers comprising at least two cationically polymerizable monomers such as isobutylene and styrene. This disclosure also includes a lengthy list of various olefinic compounds including isobutylene, styrene, alpha-methylstyrene and other such compounds. Furthermore, these compounds have been used in a variety of applications, including use as adhesives in connection with other materials taking advantage of the surface characteristics of the polyisobutylene sequences, as coatings, as asphalt blends, and in various plastic blends. As is discussed in the '868 patent, it is also well known to produce terpolymers including isoprene, but doing so reduces the overall polymer molecular weight rendering the production of high molecular weight polymers therefrom difficult, and complicating the overall production sequence.

There have also been attempts to produce various functionalized polymers. For example, Hankey et al, U.S. Patent No. 3,145,187, discloses polymer blends which include a vinyl chloride polymer, a surfactant, and a chlorinated olefin polymer, and the latter is said by this patentee to include copolymers of various materials which can include isobutylene and styrene, as well as ring-alkyl styrenes, among a large number of other compounds, which olefin polymers can then be chlorinated by known methods.

The literature has also disclosed other routes for obtaining copolymers of isobutylene and styrene, such as that shown in Powers et al, U.S. Patent No. 4,074,035, which discloses the copolymerization of isobutylene with halomethylstyrene. This technique requires the use of vinylbenzyl chloride and the like as a starting material, and utilizes a specified continuous solution process with solvent or mixed solvent systems in which the monomers are soluble under specified conditions. Aside from the need to employ the expensive vinylbenzyl chloride starting material, these processes also have limitations in terms of the quantity of aromatic chloromethyl functionality which can be incorporated in this manner without encountering excessive chain branching and gel formation during polymerization and polymer recovery because of the reactivity of the benzylic chlorine under cationic polymerization conditions. Such a procedure is also discussed in Jones et al "Isobutylene copolymers of vinylbenzyl chloride and isopropenylbenzyl chloride" Journal of Applied Polymer Science, Volume V, Issue No. 16, pp. 452-459 (1969) in which the aromatic monomer is said to be a mixture of the para and ortho isomers.

There has also been some interest in the halomethylation of isobutylene/styrene copolymers, such as discussed in a paper by Sadykhov, et al entitled "Chloromethylation of an Isobutylene-Styrene Copolymer and Some of Its Chemical Reactions." Acerb. Neft. Khoz. 1979 (6) 37-9.

In an article by Harris, et al. Entitled "Block and Graft Copolymers of Pivalolactone..." Macromolecules, 1986, 19, 2903-2908, the authors discuss the copolymerization of isobutylene with styrene and preferably a ring-methylated styrene. This article specifically discloses copolymerization with vinyl toluene, comprising a mixture of meta- and para-methylstyrene in approximately equal amounts, and with para-methylstyrene, for the purpose of producing thermoplastic elastomer pivalolactone copolymer systems with no auto-oxidizable aliphatic unsaturation. The article fails to recognize any difference between the use of vinyl toluene and para-methylstyrene, and in any event, even when it employs the latter, it employs conditions which result in copolymers having the properties, including heterogeneous compositional distribution and very broad molecular weight distribution for the unfractionated copolymer, as set forth in Tables 4 and 5, which include an $M_N$ for the unfractionated copolymer of 16,000, an $M_W/M_N$ of 17.45 therefor, and a 4-methylstyrene content in the polymer which varies considerably as a function of molecular weight.

The preparation of a copolymer of isopropenyl toluene and isobutylene is disclosed in a paper entitled "Cationic Low Temperature Copolymerization of Isopropenyl Toluene with Isobutylene" Azerb. Khim. Zh., no. 2, 1971, Baku, pp.

57 to 61, Sadykhov, et al. The document discloses that the n-isopropenyl toluene produces a carbonium ion that is even more stable than the carbonium ion produced from alpha-methyl styrene.

Finally, there are also articles which discuss copolymers of isobutylene and para-methylstyrene without discussing any method for preparing them. These articles include Sadykhov, et al. "Studies of Oxidative Thermal Degradation of Copolymers of Isobutylene with m-and p-methylstyrenes in a Solution of Mineral Oils", Uch. Zap. Azerb. Un. T. Ser. Khum. 1975 (304) 87-92, and other such articles. Furthermore, in Toman, et al., "Isobutylene Polymers and Copolymers with Controlled Structure" Appl. 78/7, 339, (November 10, 1978), there is reference to the copolymerization of isobutylene with vinyl aromatic monomers. The search has thus continued for useful molecular weight copolymers of isobutylene and alkyl styrenes, and in particular for functionalized copolymers of this type which can be cross-linked, and otherwise used in a variety of applications.

## SUMMARY OF THE INVENTION

In accordance with the present invention, the applicants have discovered copolymers comprising the direct reaction product of isoolefin having from 4 to 7 carbon atoms and para-alkylstyrene in which the copolymers have a substantially homogeneous compositional distribution. Thus, Applicants' copolymers can be distinguished from previous copolymers on this basis in that they have essentially the same ratio of the isoolefin to the para-alkylstyrene components at all selected fractions thereof. In a preferred embodiment, the isoolefin comprises isobutylene, and the para-alkylstyrene comprises para-methylstyrene.

Thus, according to the invention, there is provided a copolymer of an iso-olefin having 4 to 7 carbon atoms and a para-alkylstyrene characterized in that said copolymer has a substantially homogeneous compositional distribution, wherein at least 95 wt% of the copolymer has a para-alkylstyrene content with 10 wt% of the average para-alkylstyrene content for the copolymer. More preferably, at least 97 wt% is within 7 wt% of the average.

The defined copolymer is preferably the direct reaction product of the iso-olefin and para-alkylstyrene comonomers. In other words, the required compositional distribution or the desirable molecular weight or molecular weight distribution is obtainable directly as a result of the copolymerization conditions employed, without the need for any subsequent fractionation or similar physical process steps designed to vary compositional or molecular weight distributions of the resultant step product. This clearly has commercial advantage. Subsequently herein reference is made to copolymers as defined above which have been halogenated, preferably brominated. For the purposes of this disclosure, such halogenated copolymers are also considered to be the direct reaction products of the comonomers, since the subsequent halogenation step is not of the same distribution-modifying nature as the fractionation step which is preferably not employed on the copolymer product.

Thus the copolymers of the invention may exist in the form wherein the ring-bonded carbon atom of the para-alkyl group of at least some of the para-alkylstyrene units carries a directly bonded halogen (preferably bromine) atom as substituent. Such halogenated copolymer is preferably free of any ring halogen or any halogen on the polymer backbone chain.

Other aspects of the inventive concept of this application are described hereinbelow and defined in the appended claims. In the claims, claim 17 is intended to make clear that any or any combination of the individual features specifically mentioned in claims 1 to 5 and 8 to 16 may be incorporated as a preferred feature of the invention defined in claim 6. Similar principles are intended to apply with regard to claim 20 and the invention defined in claim 19.

The process of the invention, as is described more fully hereinafter, makes use of the applicants' discovery that by controlling the impurity levels in the copolymerization process, it is possible to produce copolymers which have a homogeneous compositional distribution and/or high molecular weight and/or narrow molecular weight distribution. The levels and nature of impurity which are permissible without resulting in undesirable heterogeneity of compositional distribution or broadening of molecular weight distribution are difficult to specify since permissible quantities depend on the type of impurity, its reactivity, and the effect it has on monomers, catalysts or products present in the copolymerization reaction mixture. However, the recognition by the applicants of the importance of impurities has made it possible for those of ordinary skill in the polymerization art readily to identify the process conditions which lead to the desired products.

In accordance with another embodiment of the present invention, applicants have also discovered the copolymer which consists essentially of the direct reaction product of iso-olefin having from 4 to 7 carbon atoms and a para-alkylstyrene, the copolymer having a number average molecular weight ($M_n$) of at least 25,000, and preferably at least 30,000. The copolymers also preferably have a ratio of weight average molecular weight ($M_w$) to number average molecular weight, or $M_w/M_n$ of less than 6, more preferably less than 4, even more preferably less than 2.5, and most preferably less than 2.

In accordance with a preferred embodiment of the copolymers of the present invention in which elastomeric copolymers are produced, these copolymers comprise between 80 and 99.5 wt % of the isoolefin such as isobutylene and 0.5 and 20 wt. % of the para-alkylstyrene such as para-methylstyrene. In accordance with another embodiment,

however, where glassy or plastic materials are being produced as well, the copolymers comprise between 10 and 99.5 wt. % of the isoolefin, or isobutylene, and 0.5 and 90 wt. % of the para-alkylstyrene, or para-methylstyrene.

In a further preferred embodiment, the substantially homogeneous copolymers of the present invention have a number average molecular weight of from 500 to 25,000.

In accordance with a preferred embodiment of the copolymers of the present invention, these copolymers include the para-alkylstyrene as

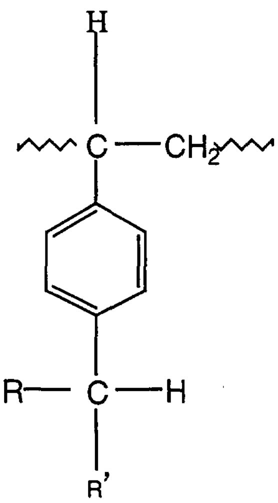

in which R and R' are, independently, either hydrogen, alkyl, or primary or secondary alkyl halides. Preferably, R and R' are hydrogen, $C_1$ to $C_5$ alkyl, or $C_1$ to $C_5$ primary or secondary alkyl halides, and most preferably R and R' are hydrogen.

In accordance with another embodiment of the present invention, applicants have also discovered halogenated copolymers of isoolefin having from 4 to 7 carbon atoms and para-alkylstyrene, which copolymers have a substantially homogeneous compositional distribution and which include the para-alkylstyrene within the copolymer as

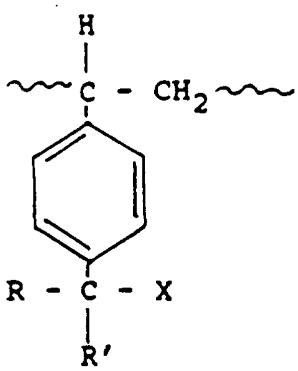

wherein R and R' are independently selected from hydrogen, alkyl, and the primary and secondary alkyl halides, and X comprises a halogen or a mixture of halogen and hydrogen. Preferably these halogenated copolymers are otherwise substantially free of any additional halogen in the form of any ring halogen or any halogen on the polymer backbone chain (i.e., on the isoolefin carbons). In a highly preferred embodiment the halogen employed is bromine.

In another embodiment of this aspect of the present invention, applicants have provided a copolymer of an isoolefin having 4 to 7 carbon atoms and a para-alkylstyrene which includes the para-alkylstyrene in the copolymer as

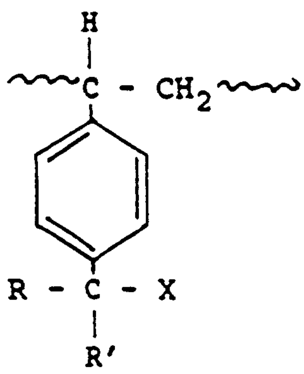

wherein R and R' are independently selected from hydrogen, alkyl, and the primary and secondary alkyl halides, and wherein X comprises bromine or a mixture of bromine and hydrogen, and in which the copolymer is otherwise substantially free of any ring bromine or any bromine on the polymer backbone chain. Preferably when R and/or R' are alkyl, they are $C_1$ to $C_5$ alkyl, and when they are primary or secondary alkyl halide, they are primary or secondary $C_1$ to $C_5$ alkyl halide. In a most preferred embodiment both R and R' are hydrogen, and the copolymer has a substantially homogeneous compositional distribution.

In accordance with another aspect of the present invention, applicants have also discovered a brominated copolymer of isoolefin having from 4 to 7 carbon atoms and para-alkylstyrene, in which the brominated copolymer includes the para-alkylstyrene as

(1) 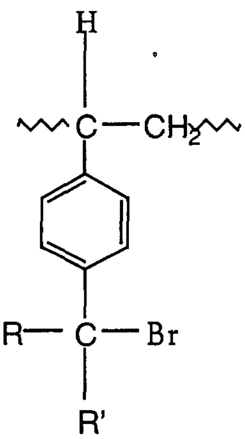

or as a mixture of (1) and (2),

(2) 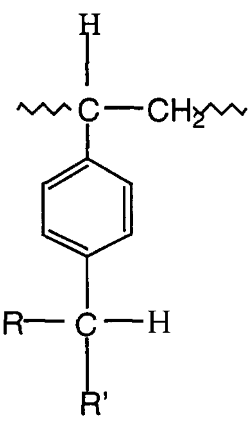

wherein R and R' are independently hydrogen, alkyl, and the primary and secondary alkyl halides, and in which the copolymer is otherwise substantially free of any ring bromine or any bromine on the polymer backbone chain.

In a highly preferred embodiment up to about 60% of the para-alkylstyrene present in the copolymer structure is in the form of (2) above.

In accordance with another aspect of the present invention, applicants have also discovered a process for producing a copolymer of isoolefin having between 4 and 7 carbon atoms and para-alkylstyrene which comprises admixing the isoolefin and the para-alkylstyrene monomer not having a directly bonded halogen atom substituent on the ring bonded carbon atom of the para-alkyl group in a copolymerization reactor under copolymerization conditions in the presence of a diluent, and a Lewis Acid catalyst, and maintaining the copolymerization reactor substantially free of impurities which can complex with the catalyst or which can copolymerize with the isoolefin or the para-alkylstyrene. In this manner, applicants have discovered that they are able to produce the above-described copolymers as direct reaction products, and which, in their as-polymerized form, have a substantially homogeneous compositional distribution, and which can also consist essentially of isoolefin and para-alkylstyrene, and have a number average molecular weight of greater than 25,000. In accordance with a preferred embodiment, the isobutylene/para-methylstyrene copolymer is insoluble in the diluent, and the process is thus a slurry polymerization process.

In another embodiment, however, in which the isobutylene/paramethylstyrene copolymer is soluble in the diluent, a solution polymerization process is described.

In accordance with a preferred embodiment of the copolymerization process of the present invention, the isobutylene and para-methylstyrene (throughout the remainder of this application the use of applicants' highly preferred embodiment of isobutylene and para-methylstyrene is intended to also include the potential use of various isoolefins and para-alkylstyrenes as set forth above) are present in the copolymer in amounts such that the isobutylene comprises between 80 and 99.5 wt. % of the mixture and the para-methylstyrene comprises between 0.5 and 20 wt. % of the mixture. In another embodiment, however, the isobutylene comprises from 10 to 99.5 wt. % of the mixture and the para-methylstyrene comprises from 0.5 to 90 wt. % of the mixture.

In accordance with another embodiment of the present invention, applicants have discovered a process for the selective halogenation of a copolymer of an
isoolefin having 4 to 7 carbon atoms and a para-alkylstyrene having the formula

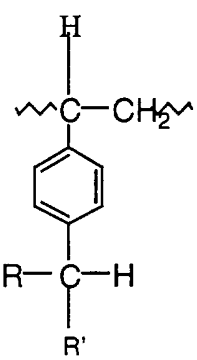

which comprises providing the copolymer and brominating the copolymer in the presence of halogen and a radical initiator so as to provide a brominated copolymer of isoolefin and para-alkylstyrene which copolymer includes the para-alkylstyrene as

(1) 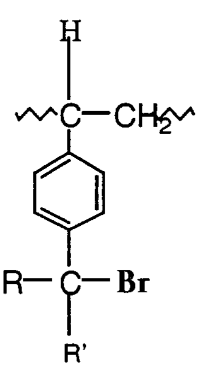

or as a mixture of (1) and (2),

(2) 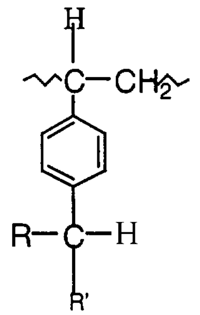

in which R and R' are independently hydrogen, alkyl, and the primary and secondary alkyl halides, and in which the copolymer is otherwise substantially free of ring halogen or any halogen on the polymer backbone chain. In accordance with one embodiment of the selected halogenation process of the present invention, the radical initiator is light or heat. In accordance with another embodiment of the present invention, the radical initiator has a half-life of between about five and 2,500 minutes, and preferably comprises a bis azo compound.

The novel copolymers of the present invention have been produced on the basis of several significant discoveries.

BRIEF DESCRIPTION OF THE FIGURE

The Figure is a typical gel permeation chromatograph for a copolymer produced in accordance with the present invention.

DETAILED DESCRIPTION

This invention is initially based upon the discovery that the polymerization of these particular monomers under certain specific polymerization conditions now permits one to produce copolymers which comprise the direct reaction product (that is, in their as-polymerized form), and which have unexpectedly homogeneous uniform compositional distributions. Thus, by utilizing the polymerization procedures set forth herein, the novel copolymers of the present invention can be produced. These copolymers, as determined by gel permeation chromatography (GPC) demonstrate narrow molecular weight distributions and substantially homogeneous compositional distributions, or compositional uniformity over the entire range of compositions thereof. Put another way, at least about 95 wt. % of the copolymer product has a para-alkylstyrene content within about 10 wt. %, and preferably within about 7 wt. %, of the average para-alkylstyrene content for the overall composition, and preferably at least about 97 wt. % of the copolymer product has a para-alkylstyrene content within about 10 wt. %, and preferably within about 7 wt. %, of the average para-alkylstyrene content for the overall composition. In a most preferred embodiment hereof, this is demonstrated by the fact that the normalized differential refractive index (DRI) and ultraviolet (UV) curves obtained by GPC for these copolymers are essentially superimposeable on each other and substantially merge into a single curve in most instances. This substantially homogeneous compositional uniformity thus particularly relates to the intercompositional distribution. That is, with the novel copolymers of this invention, as between any selected molecular weight fraction the percentage of para-alkylstyrene therein, or the ratio of para-alkylstyrene to isoolefin, will be substantially the same, in the manner set forth above.

In addition, applicants have also found, however, that since the relative reactivity of para-alkylstyrene with isoolefin such as isobutylene is close to one, the intracompositional distribution of these copolymers will also be substantially homogeneous. That is, these copolymers are essentially random copolymers, and in any particular polymer chain the para-alkylstyrene and isoolefin units will be essentially randomly distributed throughout that chain.

These properties of these copolymers leads to a number of distinct advantages over the prior art, including the ability to produce copolymers having high molecular weights, and in particular having number average molecular weights generally greater than about 25,000, preferably greater than about 50,000, and more preferably greater than about 100,000. These compositions also generally have viscosity average molecular weights greater than about 300,000, preferably greater than about 500,000, such as up to about 1,000,000 or more, or even up to about 2,000,000 or more.

In addition to these high molecular weight products, however, the copolymers of the present invention also

include compositionally homogeneous copolymers having a relatively low number average molecular weight. These products also exhibit a relatively narrow molecular weight distribution, i.e., in both their high and low molecular weight forms. In particular, these copolymers thus exhibit $\overline{M}_w/\overline{M}_n$ values of less than about 6, preferably less than about 4, more preferably less than about 2.5, and most preferably less than about 2, and at the same time, depending upon the ultimate intended use thereof, can have low number average molecular weight ($\overline{M}_n$) from about 500 to about 25,000, preferably from about 750 to about 20,000, more preferably from about 1,000 to about 15,000, and most preferably from about 1,200 to about 10,000.

The copolymers of the present invention can be compared, for example, to the materials disclosed in the article by Harris *et al* referred to on page 3 of the specification, as well as the Harris *et al* U.S. Patent No. 4,145,190 cited therein. The Harris *et al* article is like much of the prior art in that it fails to recognize any distinction between the use of para-methylstyrene and the use of vinyl toluene (generally comprising about 60% meta-methylstyrene and about 40% para-methylstyrene). With respect to the compositional uniformity of the product of polymerization thereof, reference can be made to Table V in Harris et *al* in which the fractionated product is set forth, as well as the further data set forth in the Supplementary Materials mentioned on page 2908 of the Harris *et al* article. Thus the ratio of isobutylene to para-methylstyrene varies considerably from fraction to fraction, and it is quite clear that the unfractionated material has a highly heterogeneous compositional distribution, as indeed appears to be the case even with the various fractions thereof. This can be contrasted to the highly uniform compositional distribution of the copolymers produced in accordance with the present invention, i.e., even without fractionation. Furthermore, it has also been found that by using the para-methylstyrene of the present invention, polymer termination and/or chain transfer does not occur as rapidly as is the case, for example, using vinyl toluene, thus permitting production of these rather high molecular weight compositions, preferably having molecular weights of commercially significant value. Again in contrast, the unfractionated material produced by Harris *et al* in Table V thereof has a number average molecular weight of 16,000, and a ratio of $\overline{M}_w/\overline{M}_n$ of 17.45, and furthermore the Supplementary Materials of Harris *et al*, although referring to $\overline{M}_n$ values far greater than this figure, include ratios of $\overline{M}_w/\overline{M}_n$ greater than those of the present copolymers, and furthermore these figures are in connection with copolymers with para-methylstyrene contents of less than about 1%.

The failure of others to produce the copolymers of the present invention having the homogeneous compositional distributions and molecular weights which applicants have now obtained can be attributed to a variety of factors. These include the failure to recognize the significance of certain aspects of the methods of producing these copolymers which have now been found to be crucial in effecting the realization of these products. Most significant in this regard is the importance of maintaining the copolymerization reactor substantially free of impurities which can complex with the catalyst being used or which can copolymerize with the monomers themselves. There are thus a great number of species which, if present in even trace amounts, will adversely affect cationic polymerization by reducing the polymer molecular weight thereof, broadening the molecular weight distribution, or in extreme cases even preventing polymerization entirely. These species are well known to those skilled in this art, and they function by reacting or complexing with the Lewis Acid polymerization catalyst or the propagating carbenium ion chain carriers. They are thus loosely referred to as "poisons," and they include a large number of Lewis bases such as water, alcohols, ethers, compounds containing carbonyl groups, nitrogen-containing compounds, such as amines, amides, nitriles, etc., and sulfur-containing compounds, such as mercaptans, thioethers, etc. These impurities or poisons also include many olefinic compounds which act as terminators or transfer agents in cationic polymerizations, such as butenes, cyclopentadiene, alpha-diisobutylene, etc., as well as species containing cationically active halogens, such as allylic, tertiary, or benzylic halogens, and basic oxides.

Since this list of impurities or "poisons" is rather extensive, it is generally necessary to carry out careful and elaborate purification processes in order to achieve pure enough materials so as to enable production of high molecular weight polymers by cationic polymerization processes. Therefore, in producing the uniform, narrow molecular weight distribution copolymers and high molecular weight copolymers of the present invention, it is preferred that the para-alkylstyrene be at least 95.0 wt. % pure, and preferably 97.5 wt. % pure, most preferably 99.5 wt. % pure, that the isoolefin be at least 99.5 wt. % pure, and preferably at least 99.8 wt. % pure, and that the diluents employed be at least 99 wt. % pure, and preferably at least 99.8 wt. % pure. Again, however, the "purity" referred to in these preferred figures is understood to be the absence of the impurities or poisons discussed above, and therefore far larger quantities of inert materials are permissible therein. Thus, the isobutylene must not contain more than about 0.5% of such impurities or poisons, but may contain larger quantities of an inert material like butane, or methyl chloride. Again, comparing these important elements of applicants' process for producing these novel copolymers to the Harris *et al* article, in that case the authors employed impure isobutylene which had merely been prepared by passing it through KOH pellets, which can thus result in variable purity from batch to batch, and in other olefinic materials being present therein, and other such impurities which reduced the overall molecular weight and broadened molecular weight distribution of the product produced by Harris *et al* by copolymerizing with the monomers therein.

Yet another reason for the failure to previously recognize the process for selective bromination of these copolymers in accordance with the present invention is the failure to appreciate the fact that the specified bromination

reaction hereof is highly selective, and can be used to almost exclusively produce benzylic bromine functionality, as compared, for example, to the substitution of the tertiary benzylic hydrogen on each of the enchained para-methyl/styryl moiety, or any of the other replaceable hydrogens thereof. Applicants, on the other hand, have not only recognized this fact, but have produced brominated copolymers of this invention which are almost exclusively mono-substituted on the para-benzylic carbon. This, in turn, permits applicants to provide brominated copolymers which are extremely useful in various cross-linking reactions to provide useful products.

The present invention is specifically directed to copolymers of isoolefin having from 4 to 7 carbon atoms, such as isobutylene, and para-alkylstyrene, such as para-methylstyrene. Most particularly, the applicants have discovered such copolymers which have unexpectedly narrow molecular weight distributions and which demonstrate, in the as-polymerized form, substantially homogeneous compositional distributions. Referring specifically to the Figure, a typical GPC chromatograph of a copolymer produced in accordance with this invention is shown therein and illustrates the narrow molecular weight distribution and unexpected compositional uniformity of the paramethylstyrene/isobutylene copolymers hereof. In the Figure the normalized differential refractive index (DRI) and ultraviolet (UV) curves are actually offset from each other so that they can both be seen in the same Figure. However, in actuality the copolymers produced in accordance with this invention are generally so compositionally uniform that without this offset both the DRI and UV curves would be essentially superimposed, and would merge into a single curve. The copolymer which was actually used to generate the Figure was analyzed by gel permeation chromatography (GPC) and is based upon such a copolymer having an $\overline{M}_w$ of 1,160,000 and a very narrow molecular weight distribution of $\overline{M}_w/\overline{M}_n$ of 1.4. However, this Figure is submitted as being typical of such results produced in connection with various such copolymers even having slightly broader molecular weight distributions, as well as for copolymers produced continuously in 6.814m$^3$ (1800-gallon) reactors, and even in connection with copolymers having para-methylstyrene levels which were increased above the 5 wt. % para-methylstyrene content of the typical copolymer exemplified by the Figure, although at higher para-methylstyrene contents there was a slight broadening of the molecular weight distribution, such as $\overline{M}_w/\overline{M}_n$ of about 2 or more.

The copolymers produced in accordance with the present invention are random and uniform and have narrow molecular weight distributions. Copolymers have also been produced at high molecular weights and can be made at low molecular weights as well. These random copolymers thus have uniformly distributed para-methylstyrene units distributed in all fractions of the copolymer, so that at least about 95 wt. % of the product has a para-methylstyrene content within about 10 wt. % of the overall average para-methylstyrene content. Thus, distributed throughout the copolymer are the para-methylstyrene units:

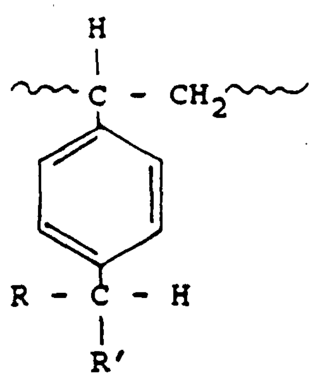

in which R and R' are, independently selected from the group consisting of hydrogen, alkyl, preferably $C_1$ to $C_5$ alkyl, and primary or secondary alkyl halides, preferably primary or secondary $C_1$ to $C_5$ alkyl halides. These copolymers, as discussed above, have molecular weight distributions or $\overline{M}_w/\overline{M}_n$ of less than about 6, preferably less than about 4, more preferably less than about 2.5, and most preferably less than about 2. By having these properties these copolymers thus demonstrate superior properties in terms of better curing, improved shear stability, lower extrusion swell ratios, etc.

With respect to the ratio of the monomers employed to produce these copolymers it is a distinct advantage of the present invention that a very wide range of the ratio of the monomers in the copolymer product can be achieved in accordance with this invention. It is therefore possible for example to produce elastomeric copolymer products which include between about 80 and 99.5 wt. %, preferably between about 80 and 99 wt. %, more preferably between about 80 and 98.5 wt. %, and most preferably between about 80 and 98 wt. % of the isoolefin or isobutylene and between about 0.5 and 20 wt. %, preferably between about 1 and 20 wt. %, more preferably between about 1.5 and 20 wt. %, and most preferably between about 2 and 20 wt. % of the para-alkylstyrene, or preferably para-methylstyrene. On the

other hand, it is also possible to produce thermoplastic materials comprising higher concentrations of para-alkylstyrene, and therefore the copolymers include between about 10 and 99.5 wt. %, preferably between about 10 and 99 wt. %, more preferably between about 10 and 98.5 wt. %, and most preferably between about 10 and 98 wt. % of the isoolefin or isobutylene, and between about 0.5 and 90 wt. %, preferably between about 1 and 90 wt. %, more preferably between about 1.5 and 90 wt. %, and most preferably between about 2 and 90 wt. % of the para-alkylstyrene, or preferably para-methylstyrene. This broad potential range of monomer ratios in the copolymer product is another distinct advantage of the present invention.

Isobutylene and para-methylstyrene are readily copolymerized under cationic conditions. The polymerization of the para-methylstyrene and isobutylene can be carried out by means of a Lewis Acid catalyst. Suitable Lewis Acid catalysts (including Friedel-Crafts catalysts) for the process according to the present invention thus include those which show good polymerization activity with a minimum tendency to promote alkylation transfer and side reactions which can lead to branching and the production of cross-links resulting in gel-containing polymers with inferior properties. The preferred catalysts are Lewis Acids based on metals from Group IIIa, IV and V of the Periodic Table of the Elements, including boron, aluminum, gallium, indium, titanium, zirconium, tin, vanadium, arsenic, antimony, and bismuth. The Group IIIa Lewis Acids have the general formula $R_mMX_n$, wherein M is a Group IIIa metal, R is a monovalent hydrocarbon radical selected from the group consisting of $C_1$ to $C_{12}$ alkyl, aryl, alkylaryl, arylalkyl and cycloalkyl radicals; m is a number from 0 to 3; X is a halogen independently selected from the group consisting of fluorine, chlorine, bromine, and iodine; and the sum of m and n is equal to 3. Nonlimiting examples include aluminum chloride, aluminum bromide, boron trifluoride, boron trichloride, ethyl aluminum dichloride ($EtAlCl_2$), diethyl aluminum chloride ($Et_2AlCl$), ethyl aluminum sesquichloride ($Et_{1.5}AlCl_{1.5}$), trimethyl aluminum, and triethyl aluminum. The Group IV Lewis Acids have the general formula $MX_4$, wherein M is a Group IV metal and X is a ligand, preferably a halogen. Nonlimiting examples include titanium tetrachloride, zirconium tetrachloride, or tin tetrachloride. The Group V Lewis Acids have the general formula $MX_y$, wherein M is a Group V metal, X is a ligand, preferably a halogen, and y is an integer from 3 to 5. Nonlimiting examples include vanadium tetrachloride and antimony pentafluoride.

The preferred Lewis Acid catalysts may be used singly or in combination with co-catalysts such as Bronsted Acids, such as anhydrous HF or HCl, or alkyl halides, such as benzyl chloride or tertiary butyl chloride. In particular, the most preferred catalysts are those which can be classified as the weaker alkylation catalysts, and these are thus the weaker Lewis Acids from among the catalysts set forth above. These most preferred catalysts, such as ethyl aluminum dichloride and preferably mixtures of ethyl aluminum dichloride with diethyl aluminum chloride, are not the catalysts that are normally preferred for use in conventional alkylation reactions, since again in the present case there is a strong desire to minimize side reactions, such as the indanyl ring formation which would be more likely to occur with those catalysts normally used to promote conventional alkylation reactions. The amount of such catalysts employed will depend on the desired molecular weight and the desired molecular weight distribution of the copolymer being produced, but will generally range from about 20 ppm to 1 wt. %, and preferably from about 0.001 to 0.2 wt. %, based upon the total amount of monomer to be polymerized therein.

Suitable diluents for the monomers, catalyst components and polymeric reaction products include the general group of aliphatic and aromatic hydrocarbons, used singly or in admixture, and $C_1$ to $C_6$ halogenated hydrocarbons used in admixture with hydrocarbon diluents in an amount up to about 100% by volume of the total diluent fed to the reaction zone. Typically, when the monomers are soluble in the selected diluent the catalyst may not necessarily also be soluble therein.

The processes of the present invention can be carried out in the form of a slurry of polymer formed in the diluents employed, or as a homogeneous solution process. The use of a slurry process is, however, preferred, since in that case lower viscosity mixtures are produced in the reactor, and slurry concentrations of up to 40 wt. % of polymer are possible. At higher slurry concentrations it is possible to operate a more efficient process in which it is necessary to recycle less of the reactants and diluent for each unit of polymer produced. For instance, at 33% slurry concentration it is only necessary to recycle two units of unreacted reactants and diluent for each unit of polymer. In any event, the amount of diluent fed to the reaction zone should be sufficient to maintain the concentration of polymer in the effluent leaving the reaction zone below about 60 wt. %, and preferably between the range of about 5 and 35 wt. %, depending upon the process being used and the molecular weight of polymer being produced. Too high a concentration of polymer is generally undesirable for several reasons, including poor temperature control, rapid reactor fouling, and the production of gel. Polymer concentrations which are too high will raise the viscosity in the reactor and require excessive power input to insure adequate mixing and the maintenance of effective heat transfer. Such inadequate mixing and loss of heat transfer efficiency can thus result in localized high monomer concentrations and hot spots in the reactor which can in turn cause fouling of reactor surfaces. However, the prior art tendency for gel production at higher polymer concentrations when producing diene-functional butyl rubbers (e.g., isobutylene-isoprene copolymer) is substantially eliminated in accordance with the present process with para-methylstyrene as the functional monomer. In any event, typical examples of the diluents which may be used alone or in admixture include propane, butane, pentane, cyclopentane, hexane, toluene, heptane, isooctane, etc., and various halohydrocarbon solvents which are particularly advantageous herein, including methylene chloride, chloroform, carbon tetrachloride, methyl chloride, with methyl chloride being particularly preferred.

It should also be noted that with any particular monomers (for example, isobutylene and para-methylstyrene), as the compositional distribution of the feed is altered therebetween, in order to maintain either a slurry or solution polymerization it can be necessary to change the diluents employed, depending upon the effect on the solubility of the copolymer in the diluent as the ratio of the monomers utilized therein is altered. In any event, as noted above an important element in the present invention is the exclusion of impurities from the polymerization reactor, namely impurities which, if present, will result in complexing with the catalyst or copolymerization with the isoolefins or the para-alkylstyrenes, which, in turn, will prevent one from producing the improved copolymer products of the present invention. Instead, products which do not have the substantially homogeneous compositional distributions and/or narrow molecular weight distributions of the present invention, will be produced. Most particularly, these impurities include the catalyst poisoning materials, moisture, and other copolymerizable monomers, such as, for example, meta-alkylstyrenes and the like. These impurities should be kept out of the system so that, in turn, the para-alkylstyrene is at least about 95.0 wt. % pure, preferably at least about 97.5 wt. % pure, most preferably at least about 99.5 wt. %, the isoolefin is at least about 99.5 wt. % pure, and preferably at least about 99.8 wt. % pure, and the diluents employed therein are at least about 99.0 wt. % pure, and preferably at least about 99.8 wt. % pure.

In general, the polymerization reactions of the present invention are carried out by admixing the para-methylstyrene and isobutylene in the presence of the catalyst (such as a Lewis Acid catalyst) and diluent in a copolymerization reactor, with thorough mixing, and under copolymerization conditions, including temperatures of at least less than about 0°C, in the case of lower molecular weight polymers, and providing a means of removing the heat of polymerization in order to maintain a desired reactor temperature. In particular, the polymerization may be carried out under batch conditions of cationic polymerization, such as in an inert gas atmosphere and the substantial absence of moisture. Preferably the polymerization is carried out continuously in a typical continuous polymerization process using a baffled tank-type reactor fitted with an efficient agitation means, such as a turbo-mixer or propeller, and draft-tube, external cooling jacket and internal cooling coils or other means of removing the heat of polymerization, inlet pipes for monomers, catalysts and diluents, temperature sensing means and an effluent overflow to a holding drum or quench tank. The reactor must be purged of air and moisture and charged with dry, purified solvent or a mixture of solvents prior to introducing monomers and catalyst.

Reactors which are typically used in butyl rubber polymerizations are generally suitable for use in the polymerization reactions of the present invention. These reactors are basically large heat exchangers in which the reactor contents are rapidly circulated through rows of heat exchange tubes which are surrounded by boiling ethylene so as to remove the heat of polymerization, and then through a central draft tube by means of an efficient marine-type impellor. Catalyst and monomers are introduced continuously into the reactor and mixed by the pump, and reactor effluent then overflows into a steam-heated flash tank. Heat of polymerization can also be removed by a pump-around loop in which the reactor contents are continuously circulated through an external heat exchanger in such a pump-around loop.

When conducting a slurry polymerization process the reactor is generally maintained at temperatures of between about -85 and -115°C, and preferably between about -89 and -96°C. Solution polymerizations and cement suspension polymerizations can be run at much warmer temperatures, such as about -40°C, depending on the copolymer molecular weight desired and the particular catalyst system used. Therefore, an acceptable solution polymerization temperature range is about -35°C to about -100°C, and preferably about -40°C to about -80°C.

The overall residence time can vary, depending upon, e.g., catalyst activity and concentration, monomer concentration, reaction temperature, and desired molecular weight, and generally will be between about one minute and five hours, and preferably between about 10 and 60 minutes.

Since the reactor does gradually foul with polymer in the slurry polymerization process, however, it does generally become necessary to periodically remove the reactor from production for cleaning. It is thus most important that the fouling polymer be soluble, so that the reactor can be cleaned by solvent washing and then returned to service. Any deposition of insoluble "gel" polymer in the reactor would be unacceptable, since it would render solvent washing ineffective, and necessitate the use of elaborate and expensive reactor cleaning procedures. This necessity to avoid the deposition of a polymer "gel" in the reactor is one of the limitations on the amount of diene which can be used in making butyl rubbers, (e.g., isobutylene-isoprene copolymer).

Use of too much diene produces such a "gel," which renders reactor cleaning difficult, as well as degrading product quality. Crosslinking to produce such a gel occurs more readily in the precipitated polymer phase, where the chains are in far more intimate contact than in the diluent phase, where the chains are separated by diluent molecules. Such crosslinking occurs most readily in polymer film precipitated on the reactor surfaces, since these films remain in contact with the active catalyst during the entire polymerization run. This tendency to form "gel" is a consequence of the reactivity, under polymerization conditions (in the presence of active catalyst) of the olefinic double bond produced in the butyl polymer backbone by incorporation of the diene. It is also this very same double bond which provides the functionality necessary for vulcanization of the product butyl rubbers. One of the major advantages of copolymerizing

para-methylstyrene instead of a diene with isobutylene is that no olefinic unsaturation is introduced into the polymer backbone during such polymerization. Therefore, no such gel is produced, even at very high para-methylstyrene incorporation levels. It is thus possible to produce isobutylene/para-methylstyrene copolymers over the entire composition range without "gel" production and without depositing "gel" in the reactor to a degree which renders cleaning difficult. In the case of para-methylstyrene as the comonomer the crosslinkable active functionality is not introduced thereinto until the copolymer is functionalized, e.g., halogenated, in a subsequent post-polymerization step. Therefore, this active functionality is not present during polymerization, and cross-linking and gel formation are not encountered at any para-methylstyrene level.

Another advantage of the use of para-methylstyrene as a comonomer with isobutylene, again as compared to dienes typically used in butyl rubber, is that its reactivity is very similar to that of isobutylene over a broad range of polymerization conditions. Therefore, substantially truly random copolymers are produced with the polymer composition being essentially the same as feed composition, independent of conversion. (Throughout the specification the polymers of this invention will be referred to as random.) The commonly used dienes, on the other hand, are much less reactive than isobutylene (i.e., $r_1$, $\sim 2.5 \pm 0.5$ for isobutylene/isoprene copolymers and $r_1$, $\sim 115 \pm 15$ for isobutylenes/butadiene copolymers, where $r_1$ is the reactivity of the isobutylene with itself as compared to isobutylene with the comonomer) so that the copolymer is much leaner in the diene than in the feed, and the polymer composition therefore changes with conversion. Furthermore, copolymer molecular weight is depressed far more in the case of the dienes than with para-methylstyrene, so that it is therefore necessary to operate at higher steady-state monomer levels (i.e., lower conversions) in order to achieve high molecular weight copolymers, and this, coupled with the low reactivity of the diene, means even lower conversion of the diene, hence necessitating the far more costly and difficult recovery and recycle discussed above. As discussed above, the diene level must also be limited to avoid the formation of "gel." The use of para-methylstyrene as a comonomer with isobutylene thus permits high molecular weight copolymers to be produced, at high conversion of both monomers, over the entire composition range, with polymer composition directly determined by feed composition, rather than also being a function of conversion and other variables, as is the case when dienes are used as the comonomers.

While the above-described advantage of slurry polymerization in enabling high polymer concentration to be handled at low viscosity, and hence with good heat transfer, has already been cited, and is the reason a slurry process is usually preferred, the copolymers of the present invention can be produced utilizing solution polymerization. Solution polymerization provides the opportunity for reduced reactor fouling, homogeneous polymerization and/or the convenience of subsequent reactions to be run directly on the resulting polymer solution. The copolymers of the present invention can also be prepared using a cement suspension polymerization process.

The new para-methylstyrene/isobutylene copolymers of this invention also afford significant advantages when produced using a solution polymerization process. Since para-methylstyrene does not cause the severe molecular weight depression characteristic of dienes, and since the molecular weight vs. polymerization temperature response of these new copolymers is much flatter than with diene functional butyl copolymers, high molecular weight copolymers can be made at much warmer temperatures (i.e., about -40°C vs. less than about -90°C with the diene functional butyl copolymers). These warmer polymerization temperatures translate into a much lower viscosity at any given polymer concentration and molecular weight. In particular, it is now possible to conduct these solution polymerizations at temperatures of from about -35°C to about -100°C, and preferably from about -40°C to about -80°C. When producing the low molecular weight polymers of this invention, for example, $\overline{M}_n$ of less than 25,000, temperatures as warm as 0°C can be used, or even up to about +10°C for very low molecular weight polymers with $\overline{M}_n$ in the range of about 500 to 1,000 $\overline{M}_n$. Furthermore, the para-methylstyrene/isobutylene copolymers have a much narrower molecular weight distribution than do the diene functional butyl rubbers, and this also results in a much lower solution viscosity at a given number average molecular weight.

Solution polymerization has the further advantage, particularly with the paramethylstyrene/isobutylene copolymers of this invention, in that the copolymers are produced in a desirable solution state to permit post polymerization chemical modification, and as pointed out above, it is the post-polymerization modified (e.g., halogenated) copolymers which are of most interest in many end uses. It is also possible to perform these post-polymerization reactions on polymer in the bulk state (i.e., using an internal mixer, extruder, etc.), but many reactions can be more easily performed in a more controlled manner on polymer solutions, which afford better mixing, heat transfer, removal of unwanted by-products, etc. In addition, certain reactions which utilize the "live" polymer chains produced during polymerization cannot be run on bulk polymer recovered from the reactor, and are best run in conjunction with solution polymerization.

The polymerization processes of the present invention can also be carried out in the form of a socalled "cement suspension" polymerization process. In particular, these are polymerization reactions carried out in a selected diluent such that the polymer is only slightly soluble in the diluent, and the diluent is sufficiently soluble in the polymer so that a second phase is formed which contains substantially all of the polymer, but wherein the continuous phase or diluent phase has a sufficiently low viscosity so that the second or polymer-rich phase can be dispersed therein. In one form of these cement suspension polymerizations they are carried out in such a diluent whose lower critical solution temperature for the polymer to be prepared is below the temperature at which the reaction is to be carried out. The lower critical solution temperature, in turn, is defined as the temperature above which the polymer is no longer soluble in a solvent. In addition, in accordance with these processes, it would be appreciated that as the temperature of a solution of polymer and diluent is increased, a temperature will be reached above which the polymer is no longer soluble. If maintained at this temperature, separation of two phases will occur with generally the lower portion being a heavier polymer-rich phase and the upper portion being a lighter solvent-rich phase. This phenomenon can thus be utilized to separate polymers from solution in conventional solution polymerization processes as discussed above. In any event, to achieve the desirable two-phase "cement suspension" it is necessary that the light phase be a very poor solvent for the polymer to maintain low viscosity, and that the polymer-rich heavy phase separate out and contain enough solvent so it behaves as a liquid and can be dispersed in the light phase. The particular details of such cement suspension processes are set forth in U.S. Patent No. 3,932,371.

An example of a post-polymerization chemical modification reaction that can be run on bulk recovered polymer, and can also be run on polymer solution produced in a solution polymerization process (after suitable quenching and removal of residual monomers) is halogenation (e.g., radical bromination) to produce the very versatile benzylic halogen-functional copolymers described herein. The surprising ease and highly selective nature of radical halogenation to introduce a benzylic halogen, and the great versatility of the benzylic halogen, makes this a most preferred modification reaction.

Functionality introducing reactions such as halogenation are carried out on the paramethylstyrene/isobutylene copolymers produced by any of the above polymerization methods in a separate post-polymerization step, with direct halogenation, and most preferably radical halogenation, being the preferred reaction. It is generally desirable to treat the polymerization copolymer product in an appropriate manner, prior to such halogenation, in order to quench the catalyst and/or remove catalyst residues, remove residual unconverted monomers, and put it into a convenient form for the halogenation reaction.

It is nearly always desirable to quench the catalyst in the reactor effluent in order to prevent continued polymerization, with the concommitant production of low molecular weight ends and/or to prevent degradation and cross-linking reactions from occurring as the effluent is warmed. This quenching can be accomplished in a conventional manner. Generally speaking, with the aluminum-based catalysts usually employed in making the copolymers of this invention and with the high catalyst efficiencies achieved, a separate catalyst residue removal step is not required, but much of this residue is extracted into the water phase in conjunction with conventional water-based finishing processes anyway.

Residual unconverted monomers left in the copolymer will react during halogenation to both consume halogen and produce generally undesirable by-products, and their presence thus renders it difficult to control and measure the amount of desired functionality introduced into the copolymer. Hence, except in cases where the copolymer has been polymerized at very high conversion, it is usually necessary to remove these residual monomers. Unreacted isobutylene is volatile enough to be easily removed in any of a variety of stripping operations, but para-methylstyrene, with its high boiling point of 170°C, is much more difficult to remove. It is therefore advantageous to polymerize at very high para-methylstyrene conversion levels so that its removal and/or recycle becomes unnecessary or, at least involves smaller amounts of material.

The halogenation reaction itself can be carried out in the bulk phase or on copolymer either in solution or in a finely dispersed slurry. Bulk halogenation can be effected in an extruder, or other internal mixer, suitably modified to provide adequate mixing and for handling the halogen and corrosive byproducts of the reaction. It has the advantages of permitting complete removal of residual unreacted para-methylstyrene by conventional finishing operations prior to halogenation, and of avoiding possible diluent halogenation as an undesired side reaction. It has the disadvantages of requiring a much more expensive and high powered reactor (i.e., extruder) than is required for solution halogenation, and of providing poorer mixing, thermal control, etc., than can be achieved in solution, so that the halogenation reaction is conducted under less homogeneous, more difficult to control conditions. The details of such bulk halogenation processes are set forth in U.S. Patent No. 4,548,995.

Solution halogenation is advantageous in that it permits good mixing and control of halogenation conditions to be achieved, easier removal of undesired halogenation by-products, and a wider range of initiators of halogenation to be employed. Its disadvantages include the need for removal of residual unreacted para-methylstyrene prior to halogenation, the presence of complicating side reactions involving solvent halogenation, and a solution step if a non-solution polymerization process is used to prepare the copolymer, as well as removal, clean-up and recycle of the solvent. Suitable solvents for such halogenation include the low boiling hydrocarbons ($C_4$ to $C_7$) and halogenated hydrocarbons. The halogenation can also be conducted with the copolymer as a fine slurry or cement suspension in a suitable diluent which is a poor solvent for the copolymer. This is advantageous from a viscosity viewpoint and allows high solids content during halogenation, but it does require that the slurry or suspension be stable with little tendency to agglomerate or plate out on reactor surfaces. Since the high boiling point para-methylstyrene makes its removal by conventional distillation impractical, and since it is difficult to completely avoid solvent halogenation, it is very important

where solution or slurry halogenation is to be used that the diluent and halogenation conditions be chosen to avoid diluent halogenation, and that residual para-methylstyrene has been reduced to an acceptable level.

Halogenation of the para-methylstyrene isobutylene copolymers of this invention is significantly different from halogenation of isobutylene-isoprene (butyl) rubbers because the primary reactive site for halogenation is entirely different. The para-methylstyrene/isobutylene copolymers contain no in-chain (backbone) olefinic unsaturation contribution from the para-methylstyrene, and the primary reactive halogenation site is thus the enchained para-methylstyrene moiety, which is far less reactive than the olefinic site in butyl rubber. Furthermore, since the broad range of copolymer compositions of the present invention can include para-methylstyrene contents of greater than 20%, and up to about 90%, the potential for such reactive sites is clearly increased. Under typical butyl rubber halogenation conditions, however (e.g., dark, non-catalyzed reactions, in a hydrocarbon solvent, at low temperature (such as less than about -80°C) and for short contact times (such as less than about 10 minutes)) no detectable halogenation of the para-methylstyrene copolymer even occurs. Furthermore, while it is possible to chlorinate para-methylstyrene copolymers in a polar diluent, the chlorinated species produced are entirely different than in the case of isobutylene-isoprene (butyl) rubber. Such chlorinated species of the present invention include chlorine on the aromatic ring, and on the polymer backbone, as well as the preferred primary benzylic chlorination, in contrast to the chlorination of the olefinic sites in the prior art copolymers.

With halogenation of paramethylstyrene/isobutylene copolymers, it is possible to halogenate the ring carbons, but the products are rather inert and of little interest. It has surprisingly been found, however, that it is possible to introduce this desired functionality into the para-methylstyrene/isobutylene copolymers hereof in high yields and under practical conditions without obtaining excessive polymer breakdown, cross-linking or other undesirable side reactions.

When halogenation of the para-methylstyrene/isobutylene copolymers hereof is carried out without using the specified selected reaction conditions, catalysts, reagents and initiators hereof, it tends to either not occur at all, or to proceed by various routes, so as to produce a variety of halogenated products. Thus, if chlorine or bromine is added to a solution of para-methylstyrene/isobutylene copolymer in a low dielectric constant hydrocarbon solvent, such as hexane or cyclohexane, in the dark at 30-60°C for about five minutes, essentially no reaction occurs. On the other hand, if the chlorination reaction is run in a more polar (higher dielectric constant) diluent, such as methylene chloride, then chlorination does occur, but apparently by many different routes, so that a variety of different chlorinated products are produced thereby. These include some of the highly desirable primary benzylic chlorine resulting from substitution on the ring methyl group, but a major amount of less desirable chlorinated products.

It is known in connection with the halogenation of small molecules that the side chain halogenation of alkyl-substituted benzenes, as opposed to nuclear substitution, is favored by radical instead of ionic conditions. This might therefore be said to suggest that such radical conditions, including the avoidance of Friedel-Crafts catalysts (or metallic halogenation catalysts in general), the avoidance of polar diluents, and the use of photochemical, thermal, or other radical initiators, would be preferred for the selective halogenation of the copolymers hereof. However, it is also known that the halogenation of polymers does not necessarily follow the same routes as that of these small molecules, particularly since even minor side reactions can be extremely significant. Furthermore, it is known that, in radical halogenation, with concurrent hydrogen replacement, tertiary hydrogens are more easily replaced than are secondary hydrogens, which are more easily replaced than are primary hydrogens. Therefore, it might be expected that the tertiary benzylic hydrogens would be more easily replaced than the primary benzylic hydrogens on the enchained para-methyl/styryl moiety in the copolymers hereof.

It has rather surprisingly been found, however, that radical bromination of the enchained para-methyl styryl moiety in the copolymers of this invention can be made highly specific with almost exclusive substitution occurring on the para-methyl group, to yield the desired benzylic bromine functionality. The high specificity of the bromination reaction can thus be maintained over a broad range of reaction conditions, provided, however, that factors which would promote the ionic reaction route are avoided (i.e., polar diluents, Friedel-Crafts catalysts, etc.).

Thus, solutions of the para-methylstyrene/isobutylene copolymers of this invention in hydrocarbon solvents such as pentane, hexane or heptane can be selectively brominated using light, heat, or selected radical initiators (according to conditions, i.e., a particular radical initiator must be selected which has an appropriate half-life for the particular temperature conditions being utilized, with generally longer half-lives preferred at warmer bromination temperatures) as promoters of radical halogenation, to yield almost exclusively the desired benzylic bromine functionality, via substitution on the para-methyl group, and without appreciable chain scisson and/or cross-linking. Without wishing to be bound by any theory, it is believed that the bromination reaction proceeds by means of a rapid radical chain reaction with the chain carrier being, alternatively, a bromine atom and a benzylic radical resulting from hydrogen atom abstraction from a para-methyl group on the enchained para-methylstyryl moiety. The proposed mechanism thus involves the following steps:

1. Initiation

$$Br_2 \xrightarrow{\text{heat or light}} 2\ Br\cdot$$

or

$$R\text{-}R \longrightarrow 2R\cdot \quad \text{(R being an initiating radical)}$$

$$Br_2 + R\cdot \rightarrow RBr + Br\cdot$$

2. Chain Reaction

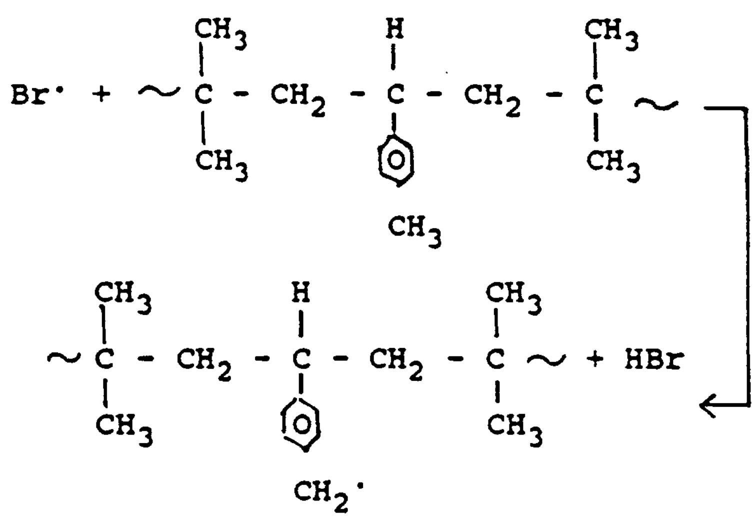

3. Chain Reaction

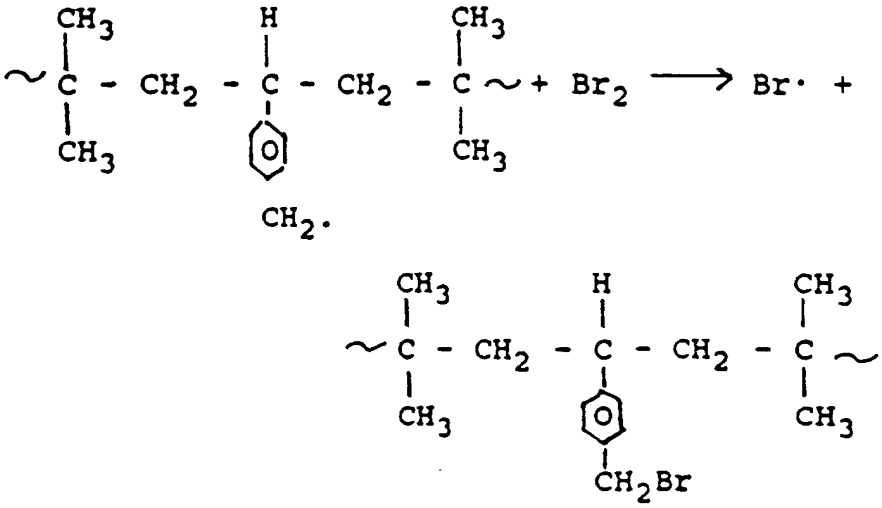

The reaction terminates when one of the radicals reacts with some radical trap in the system, or the radicals destroy themselves by recombination or disproportionation.

This reaction can be initiated as shown in step (1) above by formation of a bromine atom, either photochemically or thermally (with or without the use of sensitizers), or the radical initiator used can be one which preferentially reacts with a bromine molecule rather than one which reacts indiscriminately with bromine atoms, or with the solvent or polymer (i.e., via hydrogen abstraction). The sensitizers referred to are those photochemical sensitizers which will themselves absorb lower energy photons and disassociate, thus causing, in turn, disassociation of the bromine, including materials such as iodine. It is thus preferred to utilize an initiator which has a half life of between about 0.5 and 2500 minutes under the desired reaction conditions, more preferably about 10 to 300 minutes. The amount of initiator employed will usually vary between 0.02 and 1% by weight on the copolymer, preferably between about 0.02 and 0.3%. The preferred initiators are bis azo compounds, such as azo bis isobutyronitrile, azo bis (2,4 dimethyl valero) nitrile, azo bis (2 methyl butyro) nitrile, and the like. Other radical initiators can also be used, but it is preferred to use a radical initiator which is relatively poor at hydrogen abstraction, so that it reacts preferentially with the bromine molecules to form bromine atoms rather than with the copolymer or solvent to form alkyl radicals. In those cases, there would then tend to be resultant copolymer molecular weight loss, and promotion of undesirable side reactions, such as cross-linking. The radical bromination reaction of this invention is highly selective, and almost exclusively produces the desired benzylic bromine functionality. Indeed, the only major side reaction which appears to occur is disubstitution at the para-methyl group, to yield the dibromo derivative, but even this does not occur until more than about 60% of the enchained para-methylstyryl moieties have been monosubstituted. Hence, any desired amount of benzylic bromine functionality in the monobromo form can be introduced into the copolymers of this invention, up to about 60 mole % of the para-methylstyrene content. Furthermore, since the para-methylstyrene content can be varied over a wide range as described herein, it is possible to therefore introduce a significant functionality range. The halogenated copolymers of this invention are thus highly useful in subsequent reactions, for example cross-linking reactions.

It is desirable that the termination reactions discussed above be minimized during bromination, so that long, rapid radical chain reactions occur, and so that many benzylic bromines are introduced for each initiation, with a minimum of the side reactions resulting from termination. Hence, system purity is important, and steady-state radical concentrations must be kept low enough to avoid extensive recombination and possible cross-linking. The reaction must also be quenched once the bromine is consumed, so that continued radical production with resultant secondary reactions (in the absence of bromine) do not then occur. Quenching may be accomplished by cooling, turning off the light source, adding dilute caustic, the addition of a radical trap, or combinations thereof.

Since one mole of HBr is produced for each mole of bromine reacted with or substituted on the enchained para-methylstyryl moiety, it is also desirable to neutralize or otherwise remove this HBr during the reaction, or at least during polymer recovery in order to prevent it from becoming involved in or catalyzing undesirable side reactions. Such neutralization and removal can be accomplished with a post-reaction caustic wash, generally using a molar excess of caustic on the HBr. Alternatively, neutralization can be accomplished by having a particulate base (which is relatively

nonreactive with bromine) such as calcium carbonate powder present in dispersed form during the bromination reaction to absorb the HBr as it is produced. Removal of the HBr can also be accomplished by stripping with an inert gas (e. g., $N_2$) preferably at elevated temperatures.

The brominated, quenched, and neutralized para-methylstyrene/isobutylene copolymers of this invention can be recovered and finished using conventional means with appropriate stabilizers being added to yield highly desirable and versatile functional saturated copolymers which are useful in many reactions and applications.

In particular, since little if any tertiary benzylic bromine is produced in the copolymer molecule, the potential dehydrohalogenation reaction will be almost entirely eliminated therein. This results in a halogenated polymer of improved stability. In addition, presence of the bromine on the ring-methyl group leads to several additional significant advantages with respect to this product. Firstly, it permits functionalization by substitution of other functional groups at that site. More particularly, the highly reactive nature of the halogen in the halomethyl group attached to an aromatic ring makes it a particularly desirable functionality to enhance and extend the usefulness of these copolymers in a range of applications. The presence of aromatic halomethyl groups in the copolymer permits cross-linking in a variety of ways under mild conditions.

The aromatic halomethyl groups permit facile cross-linking to be accomplished in a variety of ways, for example, either directly through the halomethyl group or by conversion to other functional groups, as indicated above, to permit the desired cross-linking reactions to be employed. Direct cross-linking can be effected with a variety of polyfunctional nucleophilic reagents such as ammonia, amines, or polyamines; metal dicarboxylates; metal dithiolates; promoted metal oxides (i.e., ZnO + dithiocarbamates), etc. Cross-linking can also be effected via polyalkylation reactions. The aromatic halomethyl groups thus provide a wide choice of cross-linking reactions to be used.

One of the advantages of a polyisobutylene polymer incorporating phenyl rings (and no backbone unsaturation) is that greatly enhanced ozone resistance can be achieved to enable a polyisobutylene-based rubber to compete more effectively with ethylene-propylene diene monomer (EPDM) rubbers in those uses requiring complete ozone resistance. The backbone unsaturation introduced into the current polyisobutylene-based elastomers (i.e., butyl rubbers) by the copolymerized isoprene moiety is the site for ozone attack, and ozone resistance of butyl rubbers deteriorates rapidly as more and more isoprene is incorporated. Even at the lowest isoprene levels required to permit vulcanization, ozone resistance is still inferior to that afforded by the fully saturated backbone of EPDM rubbers. Elimination of the isoprene with the cross-linking sites being provided by functionalized phenyl rings provide a saturated isobutylene-based rubber with ozone resistance comparable to EPDM as well as with improved oxidative resistance. In addition, the presence of the phenyl rings enhances the UV resistance of polyisobutylene to reduce surface degradation and tack development during outdoor exposure to sunlight. Furthermore, functionalization via the phenyl rings permits more thermally stable cross-links to be produced than the sulfur linkages formed with typical accelerated sulfur vulcanization of commercial isoprene unsaturated butyl rubbers, so that more thermally stable vulcanizates (limited only by chain backbone stability) can be produced. General overall aging and weathering resistance is superior to the isoprene unsaturated butyl rubbers.

Still another disadvantage of diene functional polyisobutylene (typical butyl rubbers) is their limited ability to covulcanize with general purpose rubbers (GPR) (e.g., highly unsaturated rubber, such as natural rubber, styrene-butadiene rubber, etc.), or even to vulcanize at all in contact with, or in blends with highly unsaturated rubbers. The limited diene functionality in typical butyl rubbers cannot compete effectively in vulcanization reactions with the general purpose rubbers, and these rubbers act as a sink for the curatives which migrate out of the butyl phase and into the unsaturated rubber to leave curative starved, virtually unvulcanized butyl in areas where it is in contact with the unsaturated rubber. This problem is overcome to some extent by halobutyl of the prior art (e.g., brominated and chlorinated butyl) which are capable of vulcanization by independent mechanisms. Even so, only limited covulcanization with GPR is achieved with halogenated butyl and their halogen functionality is limited because of the problems already discussed related to incorporating more than 3 - 4 mole % diene (the site for halogenation) into butyl rubbers. Polyisobutylene-based elastomers functionalized through phenyl groups can have a much higher concentration of functionality and functionality more amenable to true covulcanization with GPR (i.e., thiol groups capable of reacting with the double bonds of the GPR can be attached to the aromatic rings to permit true covulcanization rather than simply simultaneous vulcanization of two dissimilar rubbers).

The present invention can be more fully understood with reference to the following specific examples thereof in which, unless indicated otherwise, all percentages indicated are weight percentages:

Example 1.

An isobutylene/para-methylstyrene random copolymer was prepared by batch polymerization in a dry box, as follows:

A 500 ml. reaction flask fitted with a thermometer, stirrer, and dropping funnel was set up in a glove box having an oxygen- and moisture-free nitrogen atmosphere and the flask was cooled to -98°C by immersion in a controlled

temperature liquid-nitrogencooled heat transfer bath. The reactor was charged with 386.6 g. purified dry methyl chloride (having a purity of 99.8%), 47.4 g. purified, dried and distilled polymerization grade isobutylene (having a purity of 99.9 %), and 2.6 g. purified, dried and vacuum-distilled para-methylstyrene (having a purity of 99.7%) to yield a feed blend containing 10.8% monomers with 5.2 wt. % para-methylstyrene (~2.5 mole %) on total monomers. Seventeen ml. of a catalyst solution consisting of 0.19 wt. % ethyl aluminum dichloride (EADC) in methyl chloride was allowed to drip slowly into the feed blend from the dropping funnel over the course of 12 minutes while stirring and attempting to maintain temperature by immersion of the reactor in the heat transfer bath. Despite the efforts at cooling, reactor temperature rose from -98°C to -80°C due to the exothermic polymerization reaction, and a slurry of polymer in a slightly tannish-colored liquid was formed. Some of the polymer agglomerated on the stirrer and reactor walls. The reactor was quenched by adding 25 ml. of cold methanol to yield an agglomerated mass of white polymer in a clear colorless liquid. The polymer was recovered by allowing the methyl chloride to flash off and kneading and washing the polymer in methanol; 0.2 wt. % butylated hydroxytoluene (BHT) was added as an antioxidant and the polymer dried in a vacuum oven at 80°C. Fifty grams of dried white, opaque, tough, rubbery polymer were covered. Conversion was 100% with a quantitative recovery of the polymer. Catalyst efficiency was about 1550 grams of polymer/grams of EADC. The recovered polymer had a viscosity average molecular weight ($M_v$) of 458,000, and contained 5.2 wt. % ( ~2.5 mole %) para-methylstyrene. Gel permeation chromatography (GPC) analysis using ultraviolet (UV) and refractive index (RI) detectors showed the para-methylstyrene to be uniformly distributed over the entire molecular weight range indicating that a compositionally homogeneous copolymer had been formed.

The gel permeation chromatography was performed using a Waters 150-C ALC/GPC (Millipore Corporation) with a Waters Lambda-Max Model 481 LC UV Spectrophotometer on line. Data were collected and analyzed using customized software developed with Computer Inquiry Systems, a division of Beckman Inc. Tetrahydrofuran was used as the mobile phase at various flow rates, but generally 1.0 ml/min. The instruments operated at 30°C at a wavelength of about 254 nm for the UV. The polyisobutylene backbone has negligible absorbance compared to the aromatic ring at this wavelength. $\mu$ Styragel (Waters) or Shodex (Showa Denko) columns were used. Sets of columns of wide porosity range were calibrated with narrow molecular weight distribution polystyrene standards with molecular weights from $10^3$ to 4 x $10^6$. Molecular weights are reported in terms of the polyisobutylene backbone using a universal calibration. The output from the UV and differential refractometer detectors can be compared quantitatively to calculate deviations in composition from the mean. Generally, viscosity average molecular weights are based on separate measurements in diisobutylene at 20°C.

Example 2

The para-methylstyrene/isobutylene copolymer prepared in Example 1 was chlorinated under radical conditions to yield a functional isobutylene/paramethylstyrene copolymer containing the desired active aromatic chloromethyl groups, as follows. Chlorine was bubbled in for 2 minutes and the solvent used was an 80/20 methylene chloride/ chloroform blend instead of pure methylene chloride in order to better dissolve the high isobutylene content, high molecular weight isobutylene/ para-methylstyrene copolymer. The chlorinated copolymer was recovered and dried as in Example 1. The recovered polymer contained ~ 5 wt. % chlorine with an $\overline{M}v$ of ~300,000. Nuclear magnetic resonance (NMR) analysis indicated about 0.5 mole % of the preferred aromatic chloromethyl group was present with the balance of the chlorine being in-chain substitution of carbons attached or adjacent to the aromatic moiety. Copolymerization of isobutylene with para-methylstyrene followed by radical chlorination thus provides aromatic chloromethyl functional polyisobutylene copolymers.

Examples 3-20

In a series of Examples, high molecular weight para-methylstyrene/isobutylene copolymers were prepared by both batch slurry and solution polymerizations in a dry box, in each case utilizing a methyl chloride diluent, and using similar apparatus and procedures to those in Example 1. These polymerizations were run in a 500 ml. reaction flask fitted with a thermometer, stirrer, and dropping funnel. The reactor was thus similarly set up in a glove box having an oxygen- and moisture-free nitrogen atmosphere and the flask was cooled to temperatures as low as -100°C by immersion in a controlled temperature liquid nitrogen-cooled heat transfer bath filled with 2-methyl pentane as the heat transfer medium. Polymerizations were run by charging the reactor with a feed blend consisting of purified dry methyl chloride; purified, dried and distilled polymerization grade isobutylene; and purified, dried, and vacuum-distilled polymerization grade para-methylstyrene, with total monomer concentrations ranging between 4 and 80%; and para-methylstyrene on isobutylene ranging between 0.5 and 400% by weight. The feed charge was cooled with stirring by immersion in the controlled temperature heat transfer bath, and polymerization was initiated by slowly dripping catalyst solution into the cooled stirring feed blend from a jacketed and cooled dropping funnel. The catalyst solution consisted of a Lewis Acid (ethyl aluminum dichloride or aluminum chloride, as indicated in Table I) dissolved in purified, dry,

methyl chloride at a concentration of from 0.1 to 0.3 wt. %, based on the monomers. The catalyst drip rate was adjusted to control polymerization rate as judged by the rate of heat evolution, and terminated when sufficient polymer had been produced. The reaction was then quenched by the addition of 25 ml. of cold methanol, and the polymer was recovered for analyses and evaluation by warming to flash off the methyl chloride and unreacted isobutylene, and by then kneading and washing in alcohol to remove unreacted para-methylstyrene and catalyst residues. An anti-oxidant (0.2% BHT) was then mixed in, and the polymer was vacuum oven dried at 80°C for 72 hours.

Rigorous attention was given to insuring the purity and dryness of all materials used, since it was desired to produce copolymers with narrow molecular weight distribution, homogeneous compositional distribution, as well as, in this Example, high molecular weight. The isobutylene used was thus greater than 99.9% pure, with traces of butenes and isobutane as the major impurities, and with a moisture content of less than 5 ppm by weight.

The methyl chloride was greater than 99.8% pure, with traces of ethyl chloride, vinyl chloride, methane, ethane, and dimethyl ether as the major impurities, and with a moisture content of less than 10 ppm by weight. The para-methyl styrene was greater than 99.7% methyl styrene (more than 97% para-methylstyrene) with traces of methyl ethyl benzenes constituting the major impurity, with less than 10 ppm of water and less than 10 ppm of carbonyls present.

The results obtained are set forth in Table I.

**TABLE I**

**BATCH SLURRY OR SOLUTION POLYMERIZATION OF PARA-METHYLSTYRENE/ISOBUTYLENE COPOLYMERS IN METHYL CHLORIDE[1]**

| Example No. | Feed % PMS/ Monomer | Catalyst Conc. | Polymerization Temp. °C | Percent Conversion | Copolymer Product Mv | Mn | Mv/Mn | % PMS | Nature | Type of Polymerization |
|---|---|---|---|---|---|---|---|---|---|---|
| 3 | 5.2 | 0.3 | -98→-80 | ~100 | 458,000 | 170,000 | ~2.5 | 5.2 | elastomer | slurry |
| 4 | 10.4 | 0.1 | -98→-96 | 41 | 361,000 | 164,000 | ~2 | 10.4 | elastomer | slurry |
| 5 | 80 | 0.1 | -96→-84 | 71 | 390,000 | 163,000 | ~2.2 | 80 | hard plastic | solution |
| 6 | 80 | 0.1 | -62→-56 | 56 | 163,000 | 74,000 | ~2 | 80 | hard plastic | solution |
| 7 | 5.2 | 0.1 | -64→-58 | 66 | 255,000 | 116,000 | ~2 | 5.2 | elastomer | slurry |
| 8 | 5.2 | 0.1 | -94→-93 | 30 | 660,000 | 300,000 | ~2 | 5.2 | elastomer | slurry |
| 9 | 10.4 | 0.1 | -99→-98 | 7.4 | 742,000 | 337,000 | ~2 | 10.4 | elastomer | slurry |
| 10 | 15.6 | 0.1 | -95→-92 | 35 | 241,000 | 110,000 | ~2 | 15.6 | elastomer | slurry |
| 11 | 15.6 | 0.1 | -92→-87 | 97 | 357,000 | 149,000 | ~2.2 | 15.6 | elastomer | slurry |
| 12 | 15.6 | 0.1 | -96 | 14 | 235,000 | 107,000 | ~2 | 15.6 | elastomer | slurry |
| 13 | 20.0 | 0.3 | -95→-92 | 59 | 256,000 | 116,000 | ~2 | 20 | sl. resinous elastomer | sl. swollen slurry |
| 14 | 20.0 | 0.3 | -99→-96 | 27 | 253,000 | 115,000 | ~2 | 20 | sl. resinous elastomer | sl. swollen slurry |
| 15 | 1.5 | 0.1 | -97→-93 | 28 | 2,906,000 | 1,321,000 | ~2 | 1.5 | elastomer | slurry |
| 16 | 3.0 | 0.1 | -98→-94 | 29 | 1,168,000 | 531,000 | ~2 | 3.0 | elastomer | slurry |
| 17 | 5.2 | 0.1 | -95→-91 | 35 | 594,000 | 270,000 | ~2 | 5.2 | elastomer | slurry |
| 18 | 5.2 | 0.1 | -95→-92 | 25 | 602,000 | 274,000 | ~2 | 5.2 | elastomer | slurry |
| 19 | 5.2 | 0.1 | -96→-92 | 57 | 566,000 | 257,000 | ~2 | 5.2 | elastomer | slurry |
| 20 | 5.2 | 0.15 | -95→-91 | 24 | 1,535,000 | 698,000 | ~2 | 5.2 | elastomer | slurry |

[1] In each of these Examples, the monomer concentration in the feed was 10.8%, except for Example 20, which was 28%. Also, in each Example the catalyst employed was ethyl aluminum dichloride, except that in Examples 18 and 19 the catalyst was $AlCl_3$. The copolymers produced in each case had a substantially homogeneous compositional distribution.

These experiments demonstrate that under polymerization conditions as set forth in accordance with this invention, and using high purity and dry materials, high molecular weight uniform copolymers can be produced over a broad composition range. Reactivity ratios are such that feed and copolymer composition are essentially identical, regardless of conversion, which is a highly desirable and unexpected result. The copolymers are of uniform composition distribution, as was shown by the superimposeability of RI and UV GPC traces, and of narrow molecular weight distribution, with $\overline{M}_w/\overline{M}_n$ ratios of approximately 2. Although the molecular weight did tend to generally decline as the percent of para-methylstyrene in the copolymer increased, the polymerization conditions can be adjusted to produce

high molecular weight copolymers at very high para-methyl styrene content (e.g., 80% para-methyl styrene--see Example 5).

It was also surprisingly noted that high molecular weight copolymers were produced at warmer polymerization temperatures, such as -65°C (see Example 7), which can be economically advantageous in commercial processes.

High molecular weights were also achieved at very high conversions (see Examples 3 and 11), and in fact molecular weight did not fall as conversion was increased, as in the prior art polymerization of diene functional butyl rubbers. A comparison of Examples 11 and 12, and 13 and 14 shows that the molecular weight of the para-methylstyrene/isobutylene copolymers actually tends to rise as conversion is increased.

The data in Table I also demonstrate that, in a methyl chloride diluent, the polymerization changes from a slurry polymerization to a solution polymerization as the percentage of para-methylstyrene is increased. Solution polymerization is thus realized at above about 50 wt. % para-methylstyrene, with typical slurry polymerization below 20 wt. % para-methylstyrene. Within the intermediate range, the copolymer precipitates as a swollen slurry, and the reactor contents take on the appearance of a cement suspension (tapioca-like consistency) depending upon conditions. Thus, suitable changes in the diluent can be utilized in order to achieve the desired type of polymerization at any desired para-methylstyrene content.

<u>Examples 21-39</u>

Another series of high molecular weight paramethylstyrene/isobutylene copolymers were prepared by solution polymerization in a dry box in hexane or a mixed hexane/methyl chloride diluent containing enough hexane to keep the copolymer formed in solution. These polymerizations were run, and the copolymers recovered and dried for analyses and evaluations, in the same manner described in Examples 1 and 3-20. All materials were rigorously purified and dried as described above. The hexane was greater than 97 mole % normal hexane, with the only impurities being other $C_6$ saturates (primarily methyl pentanes) and it contained less than 5 ppm water by weight.

The results obtained are set forth in Table II.

TABLE II

BATCH SOLUTION POLYMERIZATION OF PARA-METHYSTYRENE/ISOBUTYLENE COPOLYMERS IN MIXED HEXANE/METHYL CHLORIDE DILUENTS[1]

| Example No. | Feed | | Catalyst Conc. | Polymerization Temp, °C | Percent Conversion | Copolymer Product | | | |
|---|---|---|---|---|---|---|---|---|---|
| | Monomer Conc. | % PMS/ Monomer | | | | Mv. | Mn | Mv/Mn | % PMS |
| 21 | 12.5 | 11.6 | 0.1 | -97→-95 | 28 | 494,000 | 225,000 | ~2 | 11.6 |
| 22 | 82 | 5.2 | 0.12 | -66→-62 | 6.5 | 742,000 | 337,000 | ~2 | 5.2 |
| 23 | 28 | 5.2 | 0.3 | -92→-76 | 61 | 1,275,000 | 472,000 | ~2.5 | 5.2 |
| 24 | 28 | 5.2 | 0.3 | -94→-90 | 36 | 1,218,000 | 554,000 | ~2 | 5.2 |
| 25 | 42.5 | 5.2 | 0.3 | -94→-84 | 23 | 1,781,000 | 742,000 | ~2.2 | 5.2 |
| 26 | 28 | 5.2 | 0.3 | -95→-88 | 61 | 1,219,000 | 530,000 | ~2.1 | 5.2 |
| 27 | 28 | 5.2 | 0.1 | -90→-80 | 97 | 659,000 | 244,000 | ~2.5 | 5.2 |
| 28 | 28 | 5.2 | 0.2 | -63→-60 | 16.4 | 396,000 | 180,000 | ~2 | 5.2 |
| 29 | 28 | 5.2 | 0.2 | -73→-69 | 15.1 | 742,000 | 337,000 | ~2 | 5.2 |
| 30 | 28 | 5.2 | 0.2 | -78→-75 | 19.3 | 948,000 | 431,000 | ~2 | 5.2 |
| 31 | 28 | 5.2 | 0.2 | -83→-73 | 56 | 1,166,000 | 507,000 | ~2.1 | 5.2 |
| 32 | 28 | 5.2 | 0.2 | -90→-86 | 12.9 | 1,252,000 | 569,000 | ~2 | 5.2 |
| 33 | 28 | 5.2 | 0.2 | -94→-85 | 36 | 1,682,000 | 781,000 | ~2.1 | 5.2 |
| 34 | 20 | 5.2 | 0.2 | -98→-90 | 26 | 1,323,000 | 575,000 | ~2.1 | 5.2 |
| 35 | 12 | 5.2 | 0.2 | -96→-82 | 51 | 1,205,000 | 502,000 | ~2.2 | 5.2 |
| 36 | 28 | 10.4 | 0.2 | -94→-86 | 26 | 910,000 | 396,000 | ~2.1 | 10.4 |
| 37 | 32 | 5.2 | 0.2 | -96→-79 | 59 | 1,036,000 | 398,000 | ~2.4 | 5.2 |
| 38 | 32 | 5.2 | 0.2 | -66→-55 | 30 | 362,000 | 151,000 | ~2.2 | 5.2 |
| 39 | 28 | 5.2 | 0.3 | -96→-88 | 17 | 1,110,000 | 505,000 | ~2 | 5.2 |

[1] In each of these Examples, the diluent in the feed was a 60/40 mixture of methyl chloride and hexane, except that in Examples 22, 37 and 38 pure hexane was utilized. In each of these Examples, the catalyst employed was ethyl aluminum dichloride, except that in Example 37 $AlCl_3$ was used. The copolymer produced in each case was elastomeric, and had a substantially homogeneous compositional distribution.

These results show that by following the teachings of this invention high molecular weight uniform copolymers can also be made by solution polymerization. Thus, the change in the diluent composition did not substantially affect the relative reactivity of the monomers, and the feed and copolymer compositions remained essentially identical, regardless of conversion. Furthermore, the copolymers were of a uniform composition (superimposeable UV and RI GPC traces) and narrow molecular weight distributions. As was the case with the slurry polymerizations carried out in methyl chloride, high molecular weight copolymers ($M_n$ greater than about 100,000) can be made at much warmer temperatures (i.e., -60°C) than is possible in the polymerization of diene-containing butyl rubber copolymers utilizing similar catalyst systems.

The 60/40 methyl chloride/hexane blend used as the diluent in most of Examples 21-39 is about the minimum hexane level required to keep the 5.2 wt. % para-methylstyrene copolymers in solution (lower hexane levels can be used with higher para-methylstyrene contents).

In addition, the same trends evident in the slurry polymerization runs of Examples 3-20 are also evident in these solution polymerizations. Molecular weight rises with feed monomer concentration, declines with increased para-methylstyrene percentage on monomers, and is relatively insensitive to conversion in a batch polymerization.

Comparative Examples 1-7

A series of examples were carried out using vinyl toluene instead of para-methylstyrene. The vinyl toluene used was the material commercially available from Dow Chemical Company as an approximately 65/35 mixture of meta- and para-methylstyrenes, and was purified by drying and vacuum distillation. The apparatus, procedures, and raw materials used were identical to those used in Examples 3-20, except that vinyl toluene was used in place of the para-methylstyrene. The data obtained is set forth in Table III.

**TABLE III**

**BATCH SLURRY POLYMERIZATION OF VINYL TOLUENE/ISOBUTYLENE COPOLYMERS IN METHYL CHLORIDE[1]**

| Compar. Example No. | Feed - % VT on Mon. | Conc. | Catalyst Temp. °C | Polymerisation % Conc. | Copolymer Mv | Mn | Mw/Mn | % VT | Comp. Dist. | Nature |
|---|---|---|---|---|---|---|---|---|---|---|
| 1 | 10.4 | 0.1 | -97→-96 | 24 | 123,000 | ~22,000 | broad | 5.1 | more VT in low ends | soft elastomer |
| 2 | 10.4 | 0.1 | -94→-89 | 93 | 130,000 | ~18,000 | broad | 9.0 | more VT in low ends | soft elastomer |
| 3 | 15.6 | 0.1 | -95→-90 | 27 | 63,000 | <10,000 | broad | 7.5 | more VT in low ends | gummy |
| 4 | 15.6 | 0.1 | -91→-88 | 80 | 56,000 | <10,000 | broad | 10.0 | more VT in low ends | gummy |
| 5 | 10.4 | 0.2 | -96→-84 | 64 | 55,000 | <10,000 | broad | 7.0 | more VT in low ends | gummy |
| 6 | 5.2 | 0.1 | -98→-97 | 17 | 205,000 | ~25,000 | broad | 2.1 | more VT in low ends | elastomer |
| 7 | 20 | 0.3 | -96→-86 | 92 | 50,000 | <10,000 | broad | 15.3 | more VT in low ends | soft leathery |

[1] In each of these Examples, the feed monomer concentration was 10.8%, and the catalyst employed was ethyl aluminum dichloride. VT represents Vinyl Tonuene herein.

These results demonstrate that, while vinyl toluene copolymerizes with isobutylene to form copolymers, the

copolymers are of low molecular weight, broad molecular weight distribution, and are not uniform. The vinyl toluene copolymers were lower in vinyl toluene content than the feed utilized therein, and composition varied with conversion. Furthermore, they were not uniform, and the vinyl toluene tended to be concentrated in the lower molecular weight species of the molecular weight distribution. Furthermore, the viscosity average molecular weight of the vinyl toluene copolymers was less than about one-third that of the comparable para-methylstyrene copolymers. The molecular weight distributions of the copolymers were very broad, so that $\bar{M}_n$ was more than an order of magnitude lower than those of corresponding para-methylstyrene copolymers. In fact, $\bar{M}_n$ was so low that they could not be accurately measured with the high molecular weight GPC column set used, nor could the $\bar{M}_w/\bar{M}_n$ ratio be accurately measured.

Example 40

This experiment was conducted in order demonstrate operability in a large scale, continuous process, and to produce larger quantities of the paramethylstyrene/isobutylene copolymers of the present invention. Polymerization was carried out in a blocked fashion using an 6.814 $m^3$ (1800-gallon) continuous polymerization reactor. This experiment was conducted by preparing an isobutylene/methyl chloride blend in a blend drum and then injecting the desired quantity of para-methylstyrene into this blend to form the paramethylstyrene/isobutylene/methyl chloride feed, which was then fed to the reactor. The reactor feed blend was chilled and fed into the reactor at a rate of about 11800 $kgh^{-1}$ (26,000 pounds per hour). A catalyst solution consisting of 0.05% activated aluminum chloride in methyl chloride, or 0.1 to 0.5% ethylaluminum dichloride in methyl chloride was also chilled and fed into the reactor at rates of between 136 and 1590 $kgh^{-1}$ (300 and 3500 pounds per hour), which were adjusted to vary the conversion and to thus produce para-methylstyrene/isobutylene copolymers of varying molecular weights. Reactor temperature was controlled by boiling ethylene in the reactor jackets, and varied between -98°C and -87°C during various portions of the run. The production rate of the copolymer varied between about 2040 and 2950 $kgh^{-1}$ (4500 and 6500 pounds per hour), at conversions of between 70% and nearly 100%.

The copolymers were then recovered and finished, with 0.2% BHT and 0.5% calcium stearate added as stabilizers. A range of paramethylstyrene/isobutylene copolymers was thus produced. The copolymers had para-methylstyrene contents of between about 2.5 and 16 wt. %, and molecular weight corresponding to about 23 Mooney viscosity at 125°C, up to about 1,400,000 $M_v$ (well beyond the measurable Mooney range), and $\bar{M}_w/\bar{M}_n$ of about 2-2.5.

Example 41

A high molecular weight random uniform copolymer of para-methylstyrene and isobutylene prepared in the manner set forth in Examples 3-20 was dissolved in hexane to provide a 12 wt. % solution. Uncatalyzed bromination reactions in the absence of light were then attempted, using procedures similar to those normally employed in the laboratory for ionic isoprene butyl brominations. These experiments, however, were unsuccessful.

The copolymer utilized in this Example had an $\bar{M}_V$ of 396,000 and contained 5.2 wt. % para-methylstyrene. The copolymer was dissolved in dried normal hexane in a two-liter baffled and jacketed resin flask set up for bromination with a four-neck resin flask top. An air-driven turbine mixer was used to provide efficient mixing, and a thermometer and thermocouple were used to measure and control the temperature, which was adjusted as noted hereinbelow by circulating a controlled temperature heat transfer fluid through the jacket. One of the necks was used for mounting a dropping funnel containing the bromine solution, which was dripped into the reactor. The funnel and reactor were foil wrapped to exclude light. A nitrogen bubbler tube with a sintered glass frit at the end was mounted in one of the necks, with the frit immersed in the reactor solution to provide nitrogen sparging at a rate which was set and controlled by a rotometer. The fourth neck was connected by plastic tubing to a knock-out trap and caustic scrubber in order to maintain several inches of water positive pressure during reaction, and to absorb and neutralize any HBr and bromine vapors given off during the reaction.

The bromine solution was prepared by adding a weighed amount of bromine to pure mole-sieve dried n-hexane (essentially olefin-free) in the dropping funnel, and mixing to form less than a 30% solution. The bromine dropping funnel was then mounted on the stirred, temperature-controlled, nitrogen-purged, foil-wrapped reactor, and the bromine solution was allowed to drip in to brominate the copolymer. After the desired reaction time (noted hereinbelow) had elapsed, excess dilute caustic solution was fed into the reactor from a second dropping funnel in order to quench the reaction by reacting with any remaining bromine, and the unstripped portion of the hydrogen bromide produced therein. The quenched reactor contents were then transferred to a washing/deashing reactor, where the copolymer solution was given from six to eight water washes by alternatively mixing in about an equal volume of distilled water and then allowing it to settle and draining off the wash water. Dilute caustic was added to the first wash water when it was necessary to carry out a basic wash, and 10% isopropanol was added to the wash water to achieve better contacting and faster separation. The washed copolymer solution was then either steam-stripped to flash off the hexane or precipitated and kneaded in isopropanol to extract the hexane and recover the wet polymer. After suitable stabilizers

were mixed into the wet recovered copolymer, it was vacuum-oven dried at ~ 70°C to recover any dried brominated copolymer for analyses and evaluation.

Although any dark bromination reaction would not be observable in the foil-wrapped reactor, the bubbling rate in the final caustic scrubber through which the vented off-gasses were passed provided a good indication of the rate at which the bromination reaction was occurring. The reaction was started with a very low nitrogen bubble rate, which was maintained and held constant (rotometer setting) throughout. As the bromination reaction progresses in an isoprene butyl bromination, hydrogen bromide produced therein is sparged out of the solution, causing the bubble rate to increase, and once the bromine is consumed and byproduct HBr production ceases, the bubble rate slows again to the initial rate. In the present Example, however, it was observed that there was no noticeable increase in bubble rate, and the recovered copolymer contained only traces of bromine, which indicated that bromination of the para-methylstyrene/isobutylene copolymer did not take place. This result was observed in a series of runs, in which the bromination temperature was varied between -10 and 60°C, the reaction time was extended to greater than 60 minutes, and the bromine charge was varied between 1 and 20 wt. % on copolymer. Even when the diluent was switched to dry heptane, and the reaction temperature was increased to 90°C, no appreciable bromination occurred. Similar results were observed when the solvent was cyclohexane, and when polarity was increased by using a methylene chloride/hexane blend with just enough hexane to dissolve the copolymer. This Example clearly shows that para-methylstyrene/isobutylene copolymers are far less reactive with bromine under typical butyl bromination conditions (ionic reaction in the absence of light) than are the olefin-containing butyl rubber copolymers, and that uncatalyzed brominations of paramethylstyrene/isobutylene copolymers do not occur to any appreciable extent under bromination conditions known to brominate isoprene-containing butyl rubber.

Example 42

A high molecular weight random, uniform copolymer of para-methylstyrene and isobutylene prepared in the manner set forth in Examples 3-20 was dissolved in dried normal hexane under nitrogen purge to form a 3.5% solution. The copolymer contained 15.6 wt. % para-methylstyrene, and had an $\overline{M}_v$ of 241,000. Bromination of this copolymer was then carried out using the apparatus and procedures set forth in Example 41, except that in this case the reactor was not foil wrapped, and a lighted 500 watt tungsten light bulb was mounted immediately next to the reactor (the bromine dropping funnel was foil wrapped to protect it from the light). The reactor was heated to 40°C and with stirring, slow nitrogen purging, and illumination, the bromine solution was dripped in. The bromine charge was 5% on the copolymer, and the reaction occurred rapidly as the bromine was added, as evidenced by rapid HBr evolution and rapid fading of the color of the solution. Bromine was added over the course of two minutes, and the reaction was quenched with excess caustic ten minutes after bromine addition had been initiated. The quenched solution then was washed with water, and the brominated copolymer was recovered by alcohol precipitation and vacuum oven drying as previously described. BHT and tetramethylthiuram disulfide were mixed into the copolymer at 0.1% by weight as stabilizers prior to drying. The recovered brominated copolymer was soluble in diisobutylene, had an $\overline{M}_v$ of 254,000, and included 1.26 wt. % bromine as measured by Dietert analysis. Analysis using 400 MHz NMR showed the presence of 0.9 mole % benzylic bromide group, with no other brominated structures detectable. GPC analysis using UV and RI detectors showed the brominated copolymer to be a uniform, homogeneous compositional distribution, narrow molecular weight distribution ($\overline{M}_w/\overline{M}_n \sim 2$) functional copolymer.

The brominated copolymer gave a good vulcanizate with a zinc oxide cure.

As opposed to the results of Example 41, this shows that radical bromination of paramethylstyrene/isobutylene copolymers proceeds readily with actinic white light as the initiator, and that substitution occurs specifically and cleanly on the paramethyl group to introduce the desired active primary benzylic bromine, and without appreciable polymer breakdown or cross-linking.

Example 43

This experiment was conducted in order to demonstrate bromination of the paramethylstyrene/isobutylene copolymers using a chemical radical initiator. A five-liter baffled resin flask set up as discussed above (except without the use of the 500 watt tungsten light bulb) was charged with 2,833g of molecular sieve-dried heptane and 500g of a random uniform copolymer of para-methylstyrene and isobutylene prepared as in the manner set forth in Examples 3-20 in a continuous low-temperature, 3.78 (one-gallon) pilot plant reactor. The copolymer contained 7.2 wt. % para-methylstyrene and had an $\overline{M}_v$ of 65,000. It was stirred under nitrogen purge to form a 15 wt. % solution, and then heated to 75°C before adding 0.6g of azo bis isobutyronitrile (AIBN). This amount of AIBN thus added as a radical initiator amounted to 0.12% on copolymer, or 180 ppm on total solution. Immediately thereafter, a 30% solution of bromine in molecular-sieve dried heptane was added quickly from a dropping funnel, and the reaction was stirred at 75°C with slight nitrogen purge and exposed to normal diffuse laboratory light for 31 minutes before being quenched

with excess dilute caustic. The bromine charge was 15 wt. % on copolymer. The reaction mixture turned a deep reddish amber color as the bromine was added, and HBr evolution was evident by an increase in the bubble rate of the vent gas. The color in the reactor also gradually faded, giving further evidence of reaction. After 31 minutes, the color had faded to a light amber, evidencing that most of the bromine had been consumed, and the reaction was quenched with excess caustic. The quenched solution was cooled and washed, and the brominated copolymer was recovered by alcohol precipitation and vacuum oven drying with 0.1% BHT and 0.1% tetramethylthiuram disulfide added as stabilizers. The recovered brominated copolymer had an $\overline{M}_v$ of 57,000 and included 5.6 wt. % bromine as measured on a calibrated Princeton Gamma Tech. bromine analyzer. Analysis using a 400 MHz NMR showed the presence of 2.4 mole % benzylic bromide groups, with no other brominated structures being detectable. GPC analysis using UV and RI detectors showed the brominated copolymer to be a uniform, narrow molecular weight distribution ($\overline{M}_w/\overline{M}_n$ 2) functional copolymer. Detailed sequence analyses using carbon 13 NMR in conjunction with the other techniques showed that the brominated copolymer was a random, uniform, narrow molecular weight distribution, polymer comprising isobutylene and para-methylstyrene, some of which was in the unbrominated form and some of which was in the form of para-methyl brominated para-methylstyrene. This polymer resulted in a good, tightly cross-linked vulcanizate with a zinc oxide cure system.

This reaction was repeated with the reactor being exposed to diffuse laboratory light, and with AIBN, but with the temperature at 30°C instead of 75°C, there was no indication of any reaction. Furthermore, the recovered copolymer contained only a trace of bromine (less than 0.1 wt. %), and showed no detectable amount of benzylic bromide group by NMR analyses. It failed to give any vulcanization activity with zinc oxide or with promoted zinc oxide vulcanization systems. The recovered copolymer had an $\overline{M}_v$ of 65,000 with 7.2 wt. % para-methylstyrene and appeared to be identical to the starting copolymer, thus demonstrating that the AIBN was ineffective at initiating the bromination reaction at this lower temperature. This Example showed that AIBN is an effective initiator at 75°C, where its half-life is about 100 minutes, but is ineffective at 30°C, where its half-life is greater than 100,000 minutes. Other experiments have shown that bis azo compounds are effective initiators under conditions where their half-life is between 0.5 and 2,500 minutes, and that the bromination reaction rate can be adjusted as desired by choosing the appropriate bis azo compound, its concentration, and the reaction temperature. AIBN is an effective initiator for this bromination reaction at temperatures between about 55 and 100°C, and at concentrations of between 0.02 and 1 wt. % on copolymer. Other radical initiators can also be used, but it is preferred to use a radical initiator which is relatively poor at hydrogen abstraction, so that it reacts preferentially with the bromine molecules to form bromine atoms rather than with the copolymer or solvent to form alkyl radicals. These other radical initiators tend to cause more copolymer molecular weight loss, and promote undesirable side reactions such as cross linking.

Example 44

A random, uniform copolymer of para-methylstyrene and isobutylene similar to that used in Example 43 was brominated using light as the initiator, and then vulcanized. The copolymer contained 7.3 wt. % para-methylstyrene, and had an $\overline{M}_v$ of 68,000. A 5 liter resin flask set up, as previously described for bromination, was charged with 400g of the copolymer and 2,933g of molecular sieve-dried normal hexane. The flask was stirred under slow nitrogen purge to form a 12 wt. % solution and then heated to 35°C. The reactor was illuminated with a 150 watt spotlight mounted adjacent to it, and a 30 wt. % solution of bromine in molecular-sieved dried normal hexane was dripped in from the dropping funnel to effect bromination, while the reactor was stirred under slight nitrogen purge and under illumination from the 150 watt spotlight. A total of 60g of bromine (15% on copolymer) was dripped in over the course of 30 minutes, with the drip rate being adjusted to maintain a light orange-yellow color in the reactor, and a moderate HBr evolution rate as judged by the bubbling rate of the vent gas. It was evident that the bromination reaction was being initiated, and that the reaction rate was most rapid in the portion of the reactor closest to the spotlight, as color was always lighter in this area. The reaction was stirred under illumination another 15 minutes after completion of the bromine addition, at which point the bromine color had entirely disappeared, and the bubble rate had fallen back to the original rate. The reaction was then quenched with excess dilute caustic solution, the solution was washed, and the copolymer was recovered and dried as described above, with 0.1% BHT and 0.1% tetramethylthiuram disulfide being mixed in as stabilizers prior to vacuum oven drying. The recovered brominated copolymer had an $\overline{M}_v$ of 70,000, and 5.6 wt. % bromine as measured by the Dietert method. Analysis on the 400 MHz NMR showed the presence of 2.4 mole % benzylic bromide groups and 1.2 mole % remaining unbrominated para-methylstyrene. About two-thirds of the para-methylstyrene had been brominated, and there was a just-detectable amount ( ~ 0.1 mole %) of dibromomethyl group present. No other brominated structures were detectable. GPC analyses using RI and UV detectors showed the brominated polymer (containing 96.4 mole % isobutylene, 1.2 mole % paramethyl styrene, and 2.4 mole % para bromo methyl styrene) to be uniform and homogeneous compositional distribution with a narrow molecular weight distribution ($\overline{M}_w/\overline{M}_n$ ~2). Even at this high bromination level there was no molecular weight loss or undesirable side reactions, other than the beginnings of some dibromination of the paramethyl group.

The active bromine-containing terpolymer thus produced was then compounded, vulcanized, and evaluated for curing activity and vulcanizate properties, using standard rubber laboratory techniques. A compound comprising 100 parts by weight of brominated polymer, 50 parts by weight of N220 carbon black, and one part by weight of stearic acid was mixed in a laboratory Banbury•, and then portions of this compound were accelerated with various vulcanization systems on a rubber compounding mill. The accelerated compounds were evaluated for vulcanization activity using a Monsanto oscillating disk rheometer, and then physical properties of the vulcanizates were evaluated by vulcanizing test pads under various cure conditions and evaluating stress-strain properties on an Instron• Tensile Testing Machine using standard tensile test specimen dumbbells cut from the pads. All compounding, vulcanization, conditioning and testing was done in accordance with ASTM and standard rubber laboratory practices. Results of this evaluation showed that the polymer had excellent vulcanization activity. Very fast, tight cures were obtained with zinc oxide alone as the vulcanization system and with various promoted zinc oxide systems.

This Example thus shows that highly useful, active bromine-containing terpolymers can be prepared by light-initiated radical bromination of the paramethylstyrene/isobutylene copolymers of this invention.

Examples 45-79

In order to demonstrate the utilization of alternative initiators for selective bromination of the copolymers of this invention in accordance herewith, a further series of radical brominations of the paramethylstyrene/isobutylene copolymers of this invention were run and the results thereof are set forth in Table IV.

**TABLE IV**

**RADICAL BROMINATIONS OF PARA-METHYLSTYRENE/ISOBUTYLENE COPOLYMERS[1]**

| Example No. | Copolymer: Para-methylstyrene Wt. % | Copolymer: Mv | Bromination Conditions: Solvent | Solution Conc. % | Initiator: Type | Initiator: % on Poly | Bromine Charge % on Polymer | Temp. °C | Bromination Time (Min.) | Product: Mv | Mole % Bromination: Mono | Mole % Bromination: Di | Weight % Bromine |
|---|---|---|---|---|---|---|---|---|---|---|---|---|---|
| 44 | 5.2 | 600,000 | hexane | 15 | light | - | 6.5 | 31 | 13 | 600,000 | 1.35 | <0.05 | 2.7 |
| 45 | 6.6 | 67,000 | hexane | 15 | light | - | 10 | 37 | 25 | 69,000 | 1.55 | <0.05 | 3.3 |
| 46 | 7.2 | 65,000 | hexane | 15 | light | - | 15 | 40 | 52 | 65,000 | 2.4 | 0.11 | 5.6 |
| 47 | 5.2 | 450,000 | hexane | 15 | light | - | 5.0 | 34 | 15 | 450,000 | 1.26 | <0.05 | 1.8 |
| 48 | 5.2 | 290,000 | heptane | 12 | AIBN | 0.26 | 10.0 | 76 | 14 | 253,000 | 1.60 | 0.20 | 3.3 |
| 49 | 5.2 | 301,000 | heptane | 15.2 | AIBN | 0.16 | 6.5 | 67 | 51 | 273,000 | 1.18 | 0.06 | 2.14 |
| 50 | 4.6 | 85,000 | hexane | 30 | light | - | 9.0 | 41 | 58 | 83,000 | 1.40 | 0.23 | 3.3 |
| 51 | 5.2 | 770,000 | heptane | 8.75 | light & AIBN | - | 6.5 | 68 | 3 | 780,000 | 1.0 | <0.05 | 1.65 |
| 52 | 4.6 | 140,000 | hexane | 26 | light | - | 6.5 | 42 | 44 | 136,000 | 1.21 | 0.12 | 2.5 |
| 53 | 5.2 | 350,000 | hexane | 15 | light | - | 6.5 | 34 | 14 | 345,000 | 1.24 | 0.11 | 2.31 |
| 54 | 5.2 | 570,000 | heptane | 14.5 | light & AIBN | - 0.18 | 6.5 | 66 | 5 | 516,000 | 1.20 | <0.05 | 2.2 |
| 55 | 6.0 | 460,000 | heptane | 15 | AIBN | 0.63 | 6.5 | 67 | 7 | 413,000 | 1.15 | <0.05 | 2.09 |
| 56 | 4.8 | 504,000 | heptane | 12.5 | AIBN | 0.25 | 6.5 | 75 | 10 | 450,000 | 1.0 | <0.05 | 1.71 |
| 57 | 4.8 | 381,000 | heptane | 12.5 | AIBN | 0.20 | 6.5 | 75 | 8 | 350,000 | 1.0 | <0.05 | 1.75 |
| 58 | 13.9 | 218,000 | heptane | 12.5 | AIBN | 0.20 | 6.5 | 74 | 5 | 215,000 | 1.62 | <0.05 | 2.48 |
| 59 | 13.9 | 218,000 | heptane | 12.5 | AIBN | 0.06 | 6.5 | 75 | 7 | 212,000 | 1.6 | <0.05 | 2.27 |
| 60 | 4.8 | 297,000 | hexane | 14.0 | VAZO 52 | 0.227 | 5.0 | 60 | 8 | 298,000 | 0.75 | 0.07 | 1.35 |

[1] In each of these Examples the bromination reaction was quenched with dilute NaOH, except that in Examples 62 and 66 $CaCO_3$ powder was utilized. In none of the products were any other bromine structures detected, and in particular no bromine was thus observed either as ring bromine or on the polymer backbone chain.

(continued)

**TABLE IV (continued)**

**RADICAL BROMINATIONS OF PARA-METHYLSTYRENE/ISOBUTYLENE COPOLYMERS[1]**

| Example No. | Copolymer: Para-methyl-styrene Wt. % | Copolymer: MV | Bromination Conditions: Solvent | Solution Conc. % | Initiator Type | Initiator % on Poly | Bromine Charge % on Polymer | Temp. °C | Bromination Time (Min.) | Product: MV | Mole % Bromination Mono | Mole % Bromination Di | Weight % Bromine |
|---|---|---|---|---|---|---|---|---|---|---|---|---|---|
| 61 | 4.8 | 297,000 | hexane | 14.0 | light | - | 5.5 | 32 | 6 | 308,000 | 1.20 | <0.05 | 2.22 |
| 62 | 4.8 | 297,000 | hexane | 14.0 | light | - | 6.5 | 31 | 7 | 350,000 | 1.20 | <0.05 | 2.2 |
| 63 | 4.8 | 297,000 | heptane | 14.0 | VAZO 67 | 0.175 | 5.0 | 75 | 8 | 277,000 | 0.8 | <0.05 | 1.55 |
| 64 | 4.8 | 297,000 | hexane | 12.5 | VAZO 52 | 0.227 | 5.0 | 50 | 28 | 280,000 | 0.7 | <0.05 | 1.36 |
| 65 | 5.7 | 140,000 | hexane | 18.75 | light | - | 6.0 | 51 | 35 | 138,000 | 0.8 | <0.05 | 1.98 |
| 66 | 4.8 | 297,000 | hexane | 14.0 | light | - | 6.0 | 35 | 9 | 297,000 | 1.1 | <0.05 | 1.84 |
| 67 | 4.8 | 297,000 | hexane | 14.0 | light | - | 3.25 | 30 | 7 | 297,000 | 0.7 | <0.05 | 1.26 |
| 68 | 4.8 | 297,000 | hexane | 7.0 | light | - | 6.5 | 60 | 2.5 | 297,000 | 0.7 | <0.05 | 1.24 |
| 69 | 4.8 | 297,000 | hexane | 7.0 | light | - | 6.5 | 30 | 5 | 297,000 | 1.1 | <0.05 | 1.88 |
| 70 | 4.8 | 297,000 | hexane | 7.0 | light | - | 3.25 | 34 | 3 | 297,000 | 0.5 | <0.05 | 0.86 |
| 71 | 5.2 | 850,000 | hexane | 9.4 | light | - | 6.5 | 34 | 13 | 900,000 | 1.20 | 0.07 | 2.0 |
| 72 | 5.0 | 410,000 | heptane | 15.0 | light | - | 9.0 | 31 | 17 | 280,000 | 1.92 | 0.28 | 3.87 |
| 73 | 5.2 | 580,000 | hexane | 15.0 | light | - | 10.0 | 36 | 26 | 480,000 | 1.84 | 0.34 | 3.94 |
| 74 | 4.9 | 290,000 | heptane | 16.7 | light | - | 9.0 | 35 | 30 | 200,000 | 1.80 | 0.48 | 3.72 |
| 75 | 4.9 | 270,000 | heptane | 15.0 | light | - | 9.0 | 36 | 18 | 205,000 | 1.70 | 0.29 | 3.50 |
| 76 | 5.2 | 350,000 | hexane | 16.0 | light | - | 5.5 | 34 | 14 | 350,000 | 1.23 | 0.07 | 2.21 |
| 77 | 5.2 | 300,000 | heptane | 15.0 | AIBN | 0.17 | 6.5 | 68 | 23 | 300,000 | 1.24 | 0.07 | 2.28 |
| 78 | 5.2 | 300,000 | heptane | 15.0 | light | - | 6.5 | 66 | 8 | 300,000 | 1.37 | 0.10 | 2.52 |

[1] In each of these Examples the bromination reaction was quenched with dilute NaOH, except that in Examples 62 and 66 $CaCO_3$ powder was utilized. In none of the products were any other bromine structures detected, and in particular no bromine was thus observed either as *ring bromine* or on the polymer backbone chain.

The copolymers utilized in these Examples were all random, uniform, narrow molecular weight distribution copolymers prepared in accordance with his invention. Some were batch polymerized in a laboratory dry box, some were polymerized in a continuous one-gallon reactor, and still others were polymerized in an 1800-gallon continuous polymerization reactor. The copolymers covered a broad range of molecular weights and para-methylstyrene contents. The radical brominations were run in hexane or heptane solutions at concentrations ranging up to nearly 30%. The solution concentrations were generally adjusted to keep the viscosity low enough to achieve good mixing, and were thus lower with the higher molecular weight copolymers. The brominations were run in the apparatus described above using 1, 2 or 5 liter resin flasks, with light or various bis azo compounds as the radical initiators. Bromination temperatures were varied between 30 and 76°C. Where bis azo compounds were used as the initiator, the temperature was chosen so that the decomposition half-life of the bis azo initiator was between 0.5 and 2,500 minutes. With AIBN, a lower practical bromination temperature was about 55°C; with 2,2'-azobis (2 methyl butane nitrile) (VAZO• 67), a lower practical bromination temperature is about 55 to 60°C; and with 2,2'-azobis (2,4 dimethylpentane nitrile) (VAZO• 52), a lower practical bromination temperature is about 40°C. The light catalyzed bromination can be run at any desired temperature, but less light is required as the temperature is raised, or at a given light irradiation level, the bromination rate becomes faster as temperature is raised. Any desired bromination rate can be achieved by setting the irradiation intensity and temperature or by choosing an appropriate bis azo compound and level, and temperature. Most of these runs were carried out to nearly complete exhaustion of the bromine charged, and were made with a slow continuous nitrogen purge to keep the reactor under slight pressure and sparge some of the HBr as it was liberated, with the remaining HBr and any unreacted bromine being quenched with dilute caustic prior to washing and polymer recovery. However, as noted, dried calcium carbonate powder was dispersed in the copolymer solution prior to bromination, and served to absorb the HBr as it was formed, thus eliminating the need for caustic quenching.

The data set forth in Table IV shows that the bromination reaction can be effected, and the brominated polymer recovered, without cross-linking and with minimal molecular weight change. The light catalyzed reactions for the most part show no molecular weight loss, except when bromination is pushed to the extent that dibromomethyl species are formed (see Examples 72-75). The bis azo catalyzed reactions are more prone to show slight molecular weight loss, but without any serious molecular weight degradation. Reactions catalyzed with other radical initiators such as peroxides which are capable of extracting hydrogen atoms result in more serious molecular weight loss and/or cross-linking.

Examples 44-78 further show that the controlled radical bromination of the homogeneous (uniform) compositional distribution narrow molecular weight distribution para-methylstyrene/isobutylene copolymers of this invention converts them into highly versatile and useful functional polymers.

<u>Examples 80-85</u>

A further series of radical brominations of the para-methylstyrene/isobutylene copolymers of this invention were run in a 378 (100-gallon) glass-lined Pfaudler reactor in order to produce larger quantities of the brominated functional polymers hereof. The Pfaudler was jacketed and temperature-controlled, fitted with a nitrogen sparger tube and vented through a knock-out trap and caustic scrubber. The Pfaudler had a variable speed anchor-type agitator and was baffled to provide good mixing. Facilities were provided to charge the bis azo initiator, bromine solution, and caustic quench solution. The quenched solution was washed in the Pfaudler by mixing with an approximately equal weight of 90/10 water/isopropyl alcohol, and then allowing separation, and draining off of the aqueous wash layer. It was given one basic wash and then water/isopropyl alcohol washes. After the final wash, 0.2 wt. % BHT based on polymer weight was added to the pfaudler solution and stirred in. The brominated polymer was recovered by steam-stripping with 0.5 wt. % on polymer of calcium stearate added during stripping to act as a crumb stabilizer during the stripping operation. The wet crumb was dried by hot milling at about 116°C (240°F). The random, uniform, narrow molecular weight distribution para-methylstyrene/isobutylene copolymers used in these larger scale bromination reactions were prepared in a one-gallon continuous reactor (Examples 80 and 85) or in an (1800-gallon) reactor (Examples 81, 82, 83 and 84).

The bis azo initiated radical chain bromination reactions proceeded with minimal copolymer breakdown or cross-linking, and bromine substitution occurred almost exclusively on the para-methyl group. In fact, no other brominated structures were detected.

GPC analysis of these brominated and unbrominated polymers using UV and RI detectors showed them to be of homogeneous compositional distribution with $\overline{M}_w/\overline{M}_n$ ratios of about 2 and with essentially superimposeable RI and UV traces comparable to that of the Figure herein.

The brominated polymer of Example 81 in Table V had a Mooney of 31 (1+8 @ 125°C) and contained about 1.8 wt. % bromine. Its composition was 0.85 mole % of the brominated para-methylstyrene, 1.5 mole % para-methylstyrene, and 97.65 mole % isobutylene. It was a rubbery, tough elastomer with a Tg of about -60°C. A compound comprising 100 parts by weight of brominated polymer, eight parts of Atomite• calcium carbonate, and one part of stearic acid was prepared on a rubber mill. Portions of this compound were accelerated with various vulcanization

systems on a second rubber compounding mill, and then evaluated for vulcanization activity using a Monsanto Rheometer @ 160°C using a 3° arc at 1.7 Hz. The rheometer cure curves for the various cured compounds were all indicative of good vulcanization, with delta torque ranging from 38.5 to 32.2, and were comparable to those of isoprene-containing butyl and halobutyl rubbers.

## TABLE V

RADICAL BROMINATIONS OF PARAMETHYL STYRENE/ISOBUTYLENE COPOLYMERS IN PFAUDLER

| | Copolymer | | | Bromination Conditions | | | | | | | | | | |
|---|---|---|---|---|---|---|---|---|---|---|---|---|---|---|
| | Mooney | Para-methyl/ | Lbs. Charged | | Solution | Interior | | Bromination Charge | | Bromi-nation | Mooney | | Mole % Bromo- | |
| Example | 1 + 8 @ | styrene | to | | Conc. | | % on | % on | Temp. | Time, | 1 + 8 @ | wt. % | methyl | |
| No. | 125° C. | Wt. % | Pfaudler | Solvent | % | Type | Polymer | Polymer | ° C. | Min. | 125° C. | Bromine | Mono | Di |
| 80 | 30 | 5.0 | 34.5 | heptane | 10.5 | AIBN | 0.25 | 6.0 | 82 | 14 | 29 | 1.64 | 1.0 | <0.05 |
| 81 | 31 | 4.8 | 50 | heptane | 15 | AIBN | 0.20 | 5.0 | 80.5 | 4.5 | 31 | 1.45 | 0.85 | <0.05 |
| 82 | $M_v$ = 1200K | 4.8 | 30.2 | heptane | 8.5 | AIBN | 0.20 | 6.7 | 78 | 6.0 | $M_v$ = 1100K | 1.50 | 0.90 | <0.05 |
| 83 | 31 | 4.8 | 50 | hexane | 15 | VAZO 52 | 0.23 | 3.75 | 60 | 9.0 | 31 | 1.10 | 0.60 | <0.05 |
| 84 | 59 | 4.8 | 52 | hexane | 14 | VAZO 52 | 0.25 | 4.2 | 57.5 | 10.0 | 60 | 1.19 | 0.70 | <0.05 |
| 85 | $M_v$ = 140K | 5.0 | 26 | hexane | 15 | VAZO 52 | 0.25 | 6.5 | 61 | 10.0 | $M_v$ = 135K | 1.80 | 1.1 | <0.05 |

Examples 86-93

Various high molecular weight random uniform copolymers of para-methylstyrene and isobutylene which had been prepared in the manner set forth in Examples 3-20 were dissolved in a diluent, and chlorination reactions were then carried out in an effort to introduce useful chlorine functionality into these copolymers, and most desirably the primary benzylic chloride by substitution on the para-methyl group. These reactions were run using the apparatus and conditions similar to those set forth in Example 41. The major important difference in this case was that the chlorine was fed into the reactor as a gas through the fritted bubbler tube used for nitrogen purging during the bromination reactions. The fritted end of the bubbler tube was immersed in the copolymer solution close to the blades of the turbine mixer so that tiny chlorine gas bubbles exiting the frit were immediately well mixed into the solution to provide good contacting. The chlorination reactions were run by joining the nitrogen and chlorine supply lines to the bubbler tube (with appropriate valving, safety regulators, etc.) so that the reactor could first be nitrogen purged, and then nitrogen could then be replaced with chlorine gas during the reaction, and finally the chlorine gas could be replaced with nitrogen after the reaction, with the reactor continually being under a slight positive pressure to exclude air. The chlorine gas was supplied by vaporizing liquefied chlorine from a cylinder through a pressure regulator and knockout pot (to keep any liquid chlorine droplets from entering the reactor) and its rate was measured and controlled by a calibrated rotometer. Normally either nitrogen or chlorine was fed separately through the fritted bubbler tube into the reactor, but obviously during the transitions between gasses a mixture was fed, and a controlled mixture could be fed continuously if desired. A second difference between the chlorination reactions of this example and the brominations of Example 41 was that no attempt was made to exclude light during the chlorination reactions which were all run under moderate diffuse normal laboratory light, since experience has shown that chlorination reactions are not normally affected by such light. The chlorination reactions were run at a temperature which was controlled by circulating a temperature-controlled heat transfer fluid through the reactor jacket. The reactions were caustic quenched and washed, and the copolymers recovered and dried as outlined above.

Example 86

A para-methylstyrene copolymer, containing 5.2 wt. % para-methylstyrene, with an $\bar{M}_v$ of 396,000, was dissolved in cyclohexane to form a 12 wt. % solution, and chlorinated at 30°C by bubbling about 5 wt. % chlorine on copolymer through the solution and allowing a total reaction time of about 30 minutes before quenching. The recovered copolymer was unchanged from the starting copolymer, with a chlorine content of less than 0.05 wt. %. A series of reactions run by varying reaction time, and the chlorine charge were likewise unsuccessful. The para-methylstyrene/isobutylene copolymers are thus far less reactive under conditions typically used to chlorinate isobutylene-isoprene copolymers than are the diene-functional butyl rubber copolymers.

Example 87

The 5.2 wt. % para-methylstyrene copolymer of Example 86 was dissolved in a 90/10 volumetric blend of dried methylene chloride/hexane solvent to form a 10 wt. % solution, and 5 wt. % stannic chloride on polymer was added as a Friedel-Crafts catalyst. The solution was chlorinated at 5°C by bubbling 5 wt. % chlorine on copolymer through the solution and allowing a total reaction time of 30 minutes before quenching. The recovered polymer contained 1.5% chlorine with an $\bar{M}_v$ of 350,000. However, analysis of this product indicated that nearly all of the chlorine had been substituted on the aromatic ring, and the chlorinated copolymer gave no vulcanization response when compounded and cured as described herein with promoted ZnO cure systems. Use of a polar diluent and a Friedel-Crafts catalyst did permit chlorination to occur, but it resulted in the incorporation of relatively unreactive ring substituted aromatic chlorines, which are not highly useful functional groups. None of the desired active primary benzylic chloride resulting from substitution on the para-methyl groups was formed. Additional experiments with various Friedel-Crafts catalysts and chlorine charges gave similar ineffective results.

Example 88

A further series of chlorinations were run in a more polar diluent, but without adding any Friedel-Crafts catalysts. The copolymer used in this Example was the same one used in Examples 86 and 87. In this Example, methylene chloride was used as the polar diluent, but with enough hexane or chloroform present to keep the copolymer in solution. A 90/10 volumetric methylene chloride/hexane blend or an 80/20 volumetric methylene chloride/chloroform blend was thus found to be a satisfactory solvent for this high isobutylene content copolymer. In this Example, the chlorination temperature was varied between 0 and 30°C, and the chlorine charge between 2 and 10 wt. % on copolymer. In this polar diluent chlorination of the copolymer did occur in all cases, but the reactions were very inefficient, with less than

25% of the chlorine charged being found in the copolymer, and the chlorine found to be essentially random with all 24 hydrogen atoms on and in the vicinity of its enchained para-methylstyrene moiety being substituted. Typically, less than 5 wt. % of the chlorine charged was found in the primary benzylic position.

The selectivity of the reaction was not found to be significantly affected by temperature over the range studied, but copolymer molecular weight loss did become more severe as the temperature was raised and the chlorine charge rate increased. Uncatalyzed chlorination was thus not found to be an efficient way of introducing benzylic chloride functionality into para-methylstyrene/isobutylene copolymers.

Examples 89-94

Another series of Examples was carried out to determine whether the chlorination reaction can be made more selective by using preformed or *"in-situ"* formed sodium hypochlorite or t-butyl hypochlorite as the chlorinating agent, instead of molecular chlorine.

As the work with molecular chlorine summarized in Examples 86-88 demonstrated, the chlorinations of Examples 82-87 were also much more efficient when a polar diluent is used. The beneficial effect of the polar diluent can be clearly seen by analyzing the results in Example 82 using preformed sodium hypochlorite as the chlorinating agent and methyl trialkyl ammonium chloride (Adogen• 465) as a phase transfer agent to achieve contact between the aqueous sodium hypochlorite phase and the copolymer solution phase.

Example 89

In this Example a para-methylstyrene/isobutylene copolymer solution containing the Adogen 464 phase transfer agent was prepared and poured into freshly prepared aqueous sodium hypochlorite solution, and the mixture was stirred to effect chlorination. After the desired reaction time, the mixture was allowed to separate, the copolymer solution was washed, and the copolymer was recovered and dried.

The sodium hypochlorite solution was prepared using the 2 liter resin flask set up described in Example 40, and 900g of 10% aqueous NaOH solution was charged to the reactor, cooled to ~ 4°C, and then converted to hypochlorite by bubbling chlorine gas into the stirred solution through the fritted bubbler tube. A slight stoichiometric excess of chlorine was charged, and the resulting sodium hypochlorite solution was a greenish-yellow and slightly acidic. The copolymer solution was added immediately, with rapid stirring, and the coarse emulsion thus produced was then heated to 30°C with stirring and allowed to react. In a first run, 1,000g of a 10% methylene chloride solution of a 7.2 wt. % para-methylstyrene/isobutylene copolymer with an $\overline{M}_v$ of 65,000 was poured into the freshly prepared hypochlorite solution and allowed to react for two hours at 30°C. In a second run, 750g of a 16% hexane solution of a 4.8 wt. % para-methylstyrene/isobutylene copolymer with an $\overline{M}_v$ of 280,000 was poured into the freshly prepared hypochlorite solution and allowed to react for two hours at 30°C. The copolymer recovered from the first run, with the polar methylene chloride solvent, contained 6.79% chlorine, with about 0.7 mole % of the desired chloromethyl styryl moiety having been formed. It was vulcanizable with zinc oxide to yield a well-cross-linked elastomer. The copolymer recovered from the second run, with the non-polar hexane solvent, contained only 0.85% chlorine with less than 0.1 mole % of the desired chloromethyl/styryl moiety having been formed. It was not vulcanizable with zinc oxide to yield an elastomeric network.

This Example demonstrates that the chlorination is more effective in a polar solvent, and that a copolymer containing active amounts of the desired primary benzylic chloride functionality can be prepared using preformed sodium hypochlorite as the chlorinating agent and a phase transfer catalyst to promote the reaction. However, even under these conditions, most of the chlorine is substituted into other positions around the enchained para-methylstyryl moiety, with less than 10% of the chlorine being substituted as desired on the para-methyl group.

Examples 90-94

A further series of Examples utilizing "*in-situ"* formed sodium hypochlorite/t-butyl hypochlorite as the chlorinating agent were then carried out, and the results are set forth in Table VI.

TABLE VI

CHLORINATION OF PARA-METHYLSTYRENE/ISOBUTYLENE COPOLYMERS WITH "IN-SITU" SODIUM HYPOCHLORITE/T-BUTYL HYPOCHLORITE[1]

| | Copolymer | | | Chlorination Conditions | | | | Product | | |
|---|---|---|---|---|---|---|---|---|---|---|
| Example No. | Para-methyl-styrene, Wt.% | Mv | Solvent | Solution Conc. | Temp. °C | Time min. | Chlorine Charge Wt. % on Copolymer | Percent Chlorine | Mv | Mole % Chloromethyl |
| 90 | 5.2 | 458,000 | 80% $CH_2Cl_2$ 20% $CHCl_3$ | 2% | 0°C | 30 | 20 | 4.6 | 276,000 | 0.7 |
| 91 | 20 | 345,000 | $CH_2Cl_2$ | 3% | 0°C | 30 | 10 | 5.2 | 340,000 | 0.8 |
| 92 | 15 | 261,000 | 80% $CH_2Cl_2$ 20% $CHCl_3$ | 4% | 0°C | 30 | 20 | 4.33 | 260,000 | 0.7 |
| 93 | 10 | 645,000 | $CH_2Cl_2$ | 7.7% | 0°C | 30 | 20 | 5.83 | 650,000 | 0.9 |
| 94 | 7.3 | 64,700 | $CH_2Cl_2$ | 10% | 0°C | 30 | 17 | 6.21 | 70,000 | 1.0 |

[1] In each of these Examples the chlorination was quenched with dilute NaOH.

All of these Examples were run in the apparatus previously described. The paramethylstyrene/isobutylene copolymers were either dissolved in a methylene chloride/chloroform mixed solvent, or dispersed as dilute cement suspensions in methylene chloride. The cement suspensions were prepared by stirring the copolymers in methylene chloride at ambient temperature and then cooling to reaction temperature. Although the low para-methylstyrene content copolymers are not soluble in methylene chloride, they are swollen enough by it to be broken up into very fine droplets of a viscous methylene-chloride-swollen, polymer-rich liquid dispersed in methylene chloride containing some dissolved copolymer. Copolymers above 7.5 wt. % para-methylstyrene content are easily handled in this way as cement suspensions. At high para-methylstyrene contents true solutions in methyl chloride are formed. True solutions of the low para-methylstyrene copolymers result where a cosolvent such as hexane or chloroform is added to the methylene chloride dispersion.

In carrying out these experiments, 0.5% by weight of t-butanol and 0.5% by weight of 1N NaOH solution (on solvent) were added and dispersed in the solution prior to chlorination. The dispersions developed a typical yellow-green hypochlorite color as the chlorine was bubbled in. The solutions or dispersions were quenched, washed and recovered as previously described. Results of those experiments as set forth in Table VI show that chlorination reactions occurred in all cases, and that active amounts of the desired primary benzylic chloride functionality were introduced as determined by vulcanization with zinc oxide. Nevertheless, in all cases, most of the chlorine was substituted in positions other than on the para-methyl group which is the most desired position.

Polymer breakdown was not significant, except in Example 83, in which a high chlorine charge rate was used in conjunction with a low para-methylstyrene-content copolymer and a dilute solution.

Example 95

In order to demonstrate the broad range of para-methylstyrene/isobutylene copolymer compositions which can be prepared in accordance with this invention, glass transition temperatures were determined for a series of para-methylstyrene/isobutylene copolymers of varying composition prepared as outlined in the previous examples. The copolymers were all uniform and random, with narrow molecular weight distributions. The entire copolymer composition range was prepared and measured, from polyisobutylene to polypara-methylstyrene. The measurements were made using 15 mg. samples of the copolymers with a Perkin-Elmer 7 Series thermal system at a heating rate of 20°C per minute. The results obtained are set forth in Table VII.

TABLE VII

| P-methylstyrene % Wt. in Copolymer | Tg, °C |
|---|---|
| 0 | -63 |
| 4.7 | -59 |
| 10.0 | -56 |
| 15.8 | -51 |
| 19.0 | -48 |
| 23.8 | -39 |
| 49.8 | -12 |
| 85.7 | 91 |
| 100 | 113 |

The glass transition temperature (Tg) rose regularly from -63°C for polyisobutylene to +113°C for polypara-methylstyrene, with the rate of rise being modest as small amounts of para-methylstyrene were copolymerized with isobutylene, and the rate of drop being rather sharp as small amounts of isobutylene were copolymerized with para-methylstyrene. There was a fairly slow rise in Tg with increasing amounts of para-methylstyrene up to about 20 wt. % (10.5 mole %), which was then more rapid with further increases in the para-methylstyrene content of the copolymer. This behavior demonstrated that substantial amounts of para-methylstyrene can be copolymerized with isobutylene to provide functionalization sites in a low Tg elastomeric copolymer. The 19 wt. % para-ethylstyrene copolymer still has a Tg of -48°C, whereas a linear rise of Tg with para-methylstyrene content would have given a Tg of above -30°C at this composition.

The copolymers hereof with less than 20 wt. % para-methylstyrene had a Tg which was sufficiently low to function as useful elastomers. At higher paramethylstyrene contents, the copolymers become increasingly leathery and resinous, and eventually they become hard plastics at ambient temperature. Thus, copolymer compositions of the present invention can be selected to provide utility in a broad range of applications.

Although the invention herein has been described with reference to particular embodiments, it is to be understood that these embodiments are morely illustrative of the principles and applications of the present invention. It is

therefore to be understood that numerous modifications may be mado to the illustrative embodiments and that other arrangements may be devised without departing from the scope of the present invention as defined by the appended claims.

## Claims

1. A copolymer comprising the direct reaction product of an iso-olefin having from 4 to 7 carbon atoms and a para-alkylstyrene **characterized in that** said copolymer has a substantially homogenous compositional distribution wherein at least 95 wt% of said copolymer has a para-alkylstyrene content within 10 wt% of the average para-alkylstyrene content for said copolymer.

2. A copolymer according to claim 1 wherein at least 97 wt% of said copolymer has a para-alkylstyrene content within 7 wt% of the average para-alkylstyrene content for said copolymer.

3. A copolymer according to either of claims 1 or 2 having a $M_W/M_N$ ratio of less than 6, preferably less than 4.

4. A copolymer according to claim 3 having a $M_W/M_N$ ratio of less than 2.5 and especially less than 2.0.

5. A copolymer according to any of the preceding claims wherein the normalized differential refractive index and ultraviolet curves obtained by gel permeation chromatography for said copolymer are essentially superimposeable.

6. A copolymer according to any of the preceding claims which has $M_N$ of at least 25,000, preferably greater than 50,000 and especially greater than 100,000.

7. A copolymer according to any of claims 1 to 5 which has $M_N$ of from 500 to 25,000.

8. A copolymer according to any of the preceding claims which comprises from 10 to 99.5 wt% of isoolefin units and from 0.5 to 90 wt% of the para-alkylstyrene units.

9. A copolymer according to claim 8 which comprises from 80 to 99.5 wt% of the isoolefin units and from 0.5 to 20 wt% of para-alkylstyrene units.

10. A copolymer according to any of the preceding claims wherein the isoolefin comprises isobutylene and/or wherein the para-alkylstyrene comprises para-methylstyrene.

11. A copolymer according to any of the preceding claims which includes the para-alkylstyrene as

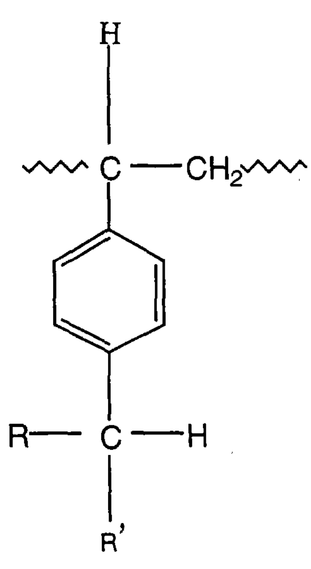

wherein R and R' are independently selected from the group consisting of hydrogen, alkyl (preferably $C_1$ to $C_5$) and the primary and secondary alkyl (preferably $C_1$ to $C_5$) halides.

**12.** A copolymer according to any of the preceding claims wherein the ring-bonded carbon atom of the para-alkyl group of at least some of the para-alkylstyrene units carries a directly bonded halogen atom as substituent.

**13.** A copolymer according to any of the preceding claims which is substantially free of any ring halogen or any halogen on the polymer backbone chain but which optionally contains halogen in the para-alkyl group of at least some of the para-alkylstyrene units.

**14.** A copolymer according to claim 12, or 13 wherein the directly bonded halogen substituent on the ring-bonded carbon of the para-alkyl group is bromine.

**15.** A copolymer according to any of claims 12 to 14 which includes the para-alkylstyrene as

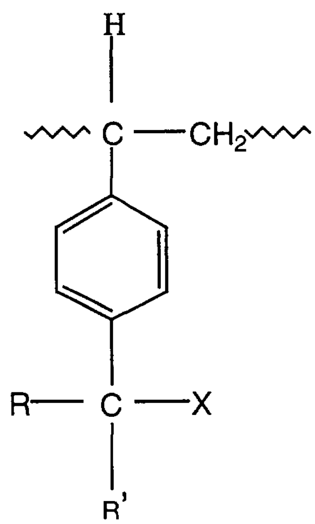

wherein R and R' are independently selected from the group consisting of hydrogen, alkyl (preferably $C_1$ to $C_5$) and primary and secondary alkyl (preferably $C_1$ to $C_5$) halides (with R and R' preferably both being hydrogen) and wherein X comprises halogen or a mixture of halogen and hydrogen.

**16.** A copolymer according to any of claims 12 to 15 wherein up to 60% of the para-alkylstyrene units are those having a directly bonded halogen atom substituent, preferably bromine, on the ring-bonded carbon atom of the para-alkyl group.

**17.** A copolymer according to claim 6 and further **characterized by** any one or more of the characterizing features defined in any claim (a) selected from claims 1 to 5 and 8 to 16, either alone or in combination with any one or more of the characterizing features defined in any other one or more of claims 1 to 5 and 8 to 16 on which said claim (a) is dependent.

**18.** A halogen containing copolymer of an isoolefin having from 4 to 7 carbon atoms and a para-alkylstyrene **characterized in that** the ring-bonded carbon of the para-alkyl group of at least some of the para-alkylstyrene units carries a directly bonded halogen atom substituent, said copolymer being (otherwise) substantially free of any ring halogen or any halogen on the polymer backbone chain.

**19.** A copolymer according to claim 18 which includes the para-alkylstyrene as

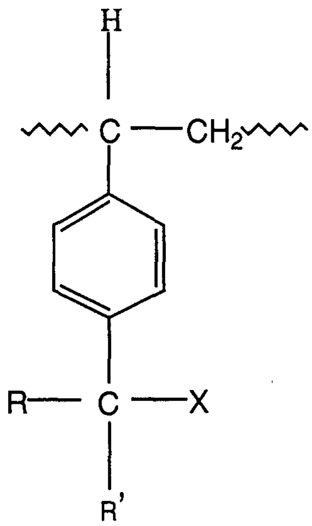

wherein R and R' are independently selected from the group consisting of hydrogen, alkyl (preferably $C_1$ to $C_5$) and the primary and secondary alkyl (preferably $C_1$ to $C_5$) halides (R and R' preferably both being hydrogen) wherein x comprises bromine or a mixture of bromine and hydrogen (such mixture preferably containing up to 60% by number of bromine).

**20.** A copolymer according to claim 18 or 19 and further **characterized by** any one or more of the characterizing features defined in any claim (b) selected from claims 1 to 11, 6 and 17, either alone or in combination with any one or more of the characterizing features defined in any other one or more of claims 1 to 11, 6 and 17 on which said claim (b) is dependent.

**21.** A process for producing a copolymer of an isoolefin having from 4 to 7 carbon atoms and para-alkylstyrene which comprises admixing isoolefin monomer and para-alkylstyrene monomer not having a directly bonded halogen atom substituent on the ring-bonded carbon atom of the para-alkyl group under copolymerization conditions in the presence of a diluent and a Lewis Acid catalyst and maintaining the copolymerization mixture substantially free of impurities which can complex with said catalyst or copolymerize with said isoolefin or said para-alkylstyrene.

**22.** A process according to claim 21 wherein said conditions include a temperature of less than 0 °C.

**23.** A process according to claim 21 or 22 wherein the catalyst comprises ethyl aluminum dichloride, diethyl aluminum chloride or mixtures thereof.

**24.** A process according to any one of claims 21 to 23 in which the copolymer is insoluble in the diluent, being a slurry polymerization process, or in which the copolymer is soluble in the diluent, being a solution polymerization process.

**25.** A process according to any one of claims 21 to 23 wherein the copolymer is only slightly soluble in the diluent and the diluent is sufficiently soluble in the copolymer to provide a second phase containing substantially all of said copolymer, being a cement suspension polymerization process.

**26.** A process according to any of claims 21 to 25 wherein the diluent is selected from aliphatic hydrocarbons, aromatic hydrocarbons, $C_1$ to $C_6$ halogenated hydrocarbons and mixtures of any two or more thereof.

**27.** A process according to any of claims 21 to 26 wherein the isobutylene monomer contains no more than 0.5 wt% of said impurities.

**28.** A process according to any of claims 21 to 27 wherein the para-alkylstyrene contains no more than 5 wt%, preferably no more than 2.5 wt%, and more preferably no more than 0.5 wt% of said impurities.

**29.** A procedure according to any of claims 21 to 28 wherein the diluent contains no more than 1 wt%, preferably not

more than 0.2 wt% of said impurities.

**30.** A process according to any of claims 21 to 29 including subsequently halogenating said copolymer, optionally by photochemical initiation, preferably using light irradiation of said copolymer in the presence of halogen or by contacting said copolymer with halogen in the presence of a free radical initiator.

**31.** A process for selectively halogenating (preferably brominating) a copolymer of an isoolefin and para-alkylstyrene which comprises providing a copolymer according to any of claims 1 to 11 or produced by the process according to any of claims 21 to 30 which contains para-alkylstyrene units not having a directly bonded halogen atom substituent on the ring-bonded carbon atom of the para-alkyl group, and halogenating (preferably brominating) said copolymer in the presence of halogen and a radical initiator so as to produce a halogenated copolymer, wherein the ring-bonded carbon atom of the para-alkyl group of at least some of the para-alkylstyrene units carries a directly bonded halogen (preferably bromine) atom as substituent said copolymer being (otherwise) substantially free of ring halogen or any halogen on the polymer backbone chain.

**32.** A process according to claim 31 wherein the radical initiator comprises light and/or heat.

**33.** A process according to claim 31 or 32 wherein the radical initiator has a half life of from 5 to 2500 minutes, preferably comprising a bis azo compound and especially such compound selected from azo bis isobutyronitrile, azo bis (2,4 dimethylvalero) nitrile, azo bis (2-methylbutyro) nitrile and mixtures thereof.

**34.** A process according to any one of claims 31 to 33 wherein halogenation is terminated before 60% of the para-alkylstyrene has been halogenated, preferably with quenching of the halogenation prior to exhaustion of the halogen therein.

**35.** A process according to any of claims 21 to 34 adapted to produce a copolymer according to any of claims 1 to 20.

**Patentansprüche**

**1.** Copolymer, das das direkte Reaktionsprodukt von Isoolefin mit 4 bis 7 Kohlenstoffatomen und para-Alkylstyrol umfasst, **dadurch gekennzeichnet, dass** das Copolymer eine im Wesentlichen homogene Zusammensetzungsverteilung hat, in der mindestens 95 Gew.% des Copolymers einen para-Alkylstyrolgehalt innerhalb von 10 Gew.% des durchschnittlichen para-Alkylstyrolgehalts dieses Copolymers haben.

**2.** Copolymer nach Anspruch 1, bei dem mindestens 97 Gew.% des Copolymers einen para-Alkylstyrolgehalt innerhalb von 7 Gew.% des durchschnittlichen para-Alkylstyrolgehalts dieses Copolymers haben.

**3.** Copolymer nach Anspruch 1 oder 2 mit einem $M_w/M_n$-Verhältnis kleiner als 6, vorzugsweise kleiner als 4.

**4.** Copolymer nach Anspruch 3 mit einem $M_w/M_n$-Verhältnis kleiner als 2,5 und insbesondere kleiner als 2,0.

**5.** Copolymer nach einem der vorhergehenden Ansprüche, bei dem die durch Gelpermeationschromatographie für das Copolymer erhaltenen normalisierten Differentialbrechungsindex- und Ultraviolettkurven im Wesentlichen dekkungsgleich sind.

**6.** Copolymer nach einem der vorhergehenden Ansprüche, bei dem das $M_n$ mindestens 25 000, vorzugsweise mehr als 50 000 und insbesondere mehr als 100 000 beträgt.

**7.** Copolymer nach einem der Ansprüche 1 bis 5, bei dem das $M_n$ 500 bis 25 000 beträgt.

**8.** Copolymer nach einem der vorhergehenden Ansprüche, das 10 bis 99,5 Gew.% Isoolefineinheiten und 0,5 bis 90 Gew.% para-Alkylstyroleinheiten umfasst.

**9.** Copolymer nach Anspruch 8, das 80 bis 99,5 Gew.% Isoolefineinheiten und 0,5 bis 20 Gew.% para-Alkylstyroleinheiten umfasst.

**10.** Copolymer nach einem der vorhergehenden Ansprüche, bei dem das Isoolefin Isobutylen umfasst und/oder bei

dem das para-Alkylstyrol para-Methylstyrol umfasst.

**11.** Copolymer nach einem der vorhergehenden Ansprüche, das das para-Alkylstyrol als

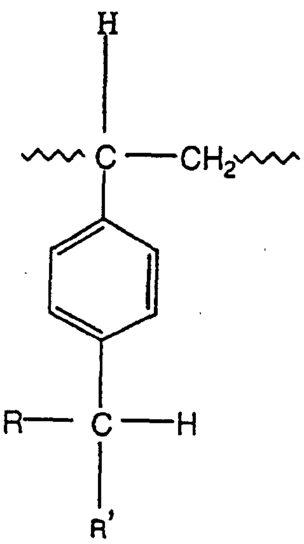

einschließt, wobei R und R' unabhängig ausgewählt sind aus der Gruppe bestehend aus Wasserstoff, Alkyl (vorzugsweise $C_1$ bis $C_5$) und den primären und sekundären Alkylhalogeniden (vorzugsweise $C_1$ bis $C_5$).

**12.** Copolymer nach einem der vorhergehenden Ansprüche, bei dem das ringgebundene Kohlenstoffatom der para-Alkylgruppe von mindestens einem Teil der para-Styroleinheiten direkt gebundenes Halogenatom als Substituenten trägt.

**13.** Copolymer nach einem der vorhergehenden Ansprüche, das im Wesentlichen frei von beliebigem Ringhalogen oder beliebigem Halogen an der Polymergrundgerüstkette ist, jedoch optional Halogen in der para-Alkylgruppe von mindestens einem Teil der para-Alkylstyroleinheiten enthält.

**14.** Copolymer nach Anspruch 12 oder 13, bei dem der direkt gebundene Halogensubstituent an dem ringgebundenen Kohlenstoff der para-Alkylgruppe Brom ist.

**15.** Copolymer nach einem der Ansprüche 12 bis 14, das das para-Alkylstyrol als

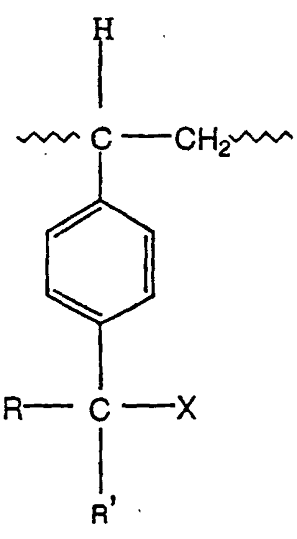

einschließt, wobei R und R' unabhängig ausgewählt sind aus der Gruppe bestehend aus Wasserstoff, Alkyl (vorzugsweise $C_1$ bis $C_5$) und primären und sekundären Alkylhalogeniden (vorzugsweise $C_1$ bis $C_5$) (wobei R und R' vorzugsweise beide Wasserstoff sind) und X Halogen oder eine Mischung aus Halogen und Wasserstoff umfasst.

**16.** Copolymer nach einem der Ansprüche 12 bis 15, bei dem bis zu 60 % der para-Alkylstyroleinheiten jene mit einem direkt gebundenen Halogenatomsubstituenten, vorzugsweise Brom, an dem ringgebundenen Kohlenstoffatom der para-Alkylgruppe sind.

**17.** Copolymer nach Anspruch 6, das ferner **gekennzeichnet ist durch** eines oder mehrere beliebige der kennzeichnenden Merkmale gemäß der Definition in beliebigem Anspruch (a) ausgewählt aus den Ansprüchen 1 bis 5 und 8 bis 16 entweder allein oder in Kombination mit einem oder mehreren beliebigen der kennzeichnenden Merkmale gemäß der Definition in einem oder mehreren beliebigen anderen der Ansprüche 1 bis 5 und 8 bis 16, von denen der Anspruch (a) abhängig ist.

**18.** Halogenhaltiges Copolymer aus Isoolefin mit 4 bis 7 Kohlenstoffatomen und para-Alkylstyrol, **dadurch gekennzeichnet, dass** der ringgebundene Kohlenstoff der para-Alkylgruppe von mindestens einem Teil der para-Alkylstyroleinheiten direkt gebundenen Halogenatomsubstituent trägt, wobei das Copolymer (ansonsten) im Wesentlichen frei von beliebigem Ringhalogen oder beliebigem Halogen an der Polymergrundgerüstkette ist.

**19.** Copolymer nach Anspruch 18, das das para-Alkylstyrol als

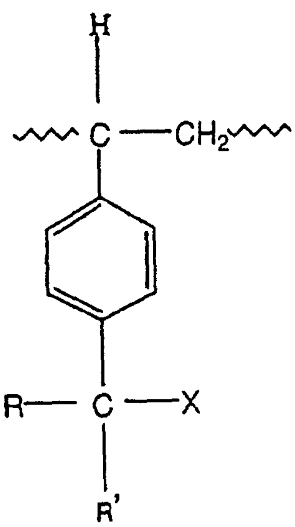

einschließt, wobei R und R' unabhängig ausgewählt sind aus der Gruppe bestehend aus Wasserstoff, Alkyl (vorzugsweise $C_1$ bis $C_5$) und den primären und sekundären Alkylhalogeniden (vorzugsweise $C_1$ bis $C_5$) (wobei R und R' vorzugsweise beide Wasserstoff sind), wobei X Brom oder eine Mischung aus Brom und Wasserstoff umfasst (wobei diese Mischung vorzugsweise bezogen auf die Anzahl bis zu 60 % Brom enthält).

**20.** Copolymer nach Anspruch 18 oder 19, das ferner **gekennzeichnet ist durch** eines oder mehrere beliebige der kennzeichnenden Merkmale gemäß der Definition in beliebigem Anspruch (b) ausgewählt aus den Ansprüchen 1 bis 11, 6 und 17 entweder allein oder in Kombination mit einem oder mehreren der kennzeichnenden Merkmale gemäß der Definition in einem oder mehreren beliebigen anderen der Ansprüche 1 bis 11, 6 und 17, von denen der Anspruch (b) abhängig ist.

**21.** Verfahren zur Herstellung von Copolymer aus Isoolefin mit 4 bis 7 Kohlenstoffatomen und para-Alkylstyrol, bei dem Isoolefinmonomer und para-Alkylstyrolmonomer, das keinen direkt gebundenen Halogenatomsubstituenten an dem ringgebundenen Kohlenstoffatom der para-Alkylgruppe aufweist, unter Copolymerisationsbedingungen in Gegenwart von Verdünnungsmittel und Lewissäure-Katalysator gemischt wird und die Copolymerisationsmischung im Wesentlichen frei von Verunreinigungen gehalten wird, die mit dem Katalysator komplexieren oder mit dem Isoolefin oder dem para-Alkylstyrol copolymerisieren können.

**22.** Verfahren nach Anspruch 21, bei dem die Bedingungen eine Temperatur von weniger als 0°C einschließen.

**23.** Verfahren nach Anspruch 21 oder 22, bei dem der Katalysator Ethylaluminiumdichlorid, Diethylaluminiumchlorid oder Mischungen derselben umfasst.

**24.** Verfahren nach einem der Ansprüche 21 bis 23, bei dem das Copolymer in dem Verdünnungsmittel unlöslich ist, was ein Aufschlämmungspolymerisationsverfahren ist, oder bei dem das Copolymer in dem Verdünnungsmittel löslich ist, was ein Lösungspolymerisationsverfahren ist.

**25.** Verfahren nach einem der Ansprüche 21 bis 23, bei dem das Copolymer in dem Verdünnungsmittel nur geringfügig löslich ist und das Verdünnungsmittel in dem Copolymer ausreichend löslich ist, um eine zweite Phase zu schaffen, die im Wesentlichen das gesamte Copolymer enthält, was ein Zement-Suspensionspolymerisationsverfahren ist.

**26.** Verfahren nach einem der Ansprüche 21 bis 25, bei dem das Verdünnungsmittel ausgewählt ist aus aliphatischen Kohlenwasserstoffen, aromatischen Kohlenwasserstoffen, halogenierten $C_1$- bis $C_6$-Kohlenwasserstoffen und Mischungen von zwei oder mehreren beliebigen derselben.

**27.** Verfahren nach einem der Ansprüche 21 bis 26, bei dem das Isobutylenmonomer nicht mehr als 0,5 Gew.% der Verunreinigungen enthält.

**28.** Verfahren nach einem der Ansprüche 21 bis 27, bei dem das para-Alkylstyrol nicht mehr als 5 Gew.%, vorzugsweise nicht mehr als 2,5 Gew.% und insbesondere nicht mehr als 0,5 Gew.% der Verunreinigungen enthält.

**29.** Verfahren nach einem der Ansprüche 21 bis 28, bei dem das Verdünnungsmittel nicht mehr als 1 Gew.%, vorzugsweise nicht mehr als 0,2 Gew.% der Verunreinigungen enthält.

**30.** Verfahren nach einem der Ansprüche 21 bis 29, bei dem das Polymer nachfolgend halogeniert wird, gegebenenfalls durch photochemische Initiierung, vorzugsweise unter Verwendung von Bestrahlung des Copolymers mit Licht in Gegenwart von Halogen oder durch Kontaktieren des Copolymers mit Halogen in Gegenwart von Freiradikalinitiator.

**31.** Verfahren zum selektiven Halogenieren (vorzugsweise Bromieren) von Copolymer aus Isoolefin und para-Alkylstyrol, bei dem Copolymer gemäß einem der Ansprüche 1 bis 11 oder hergestellt nach dem Verfahren gemäß einem der Ansprüche 21 bis 30 bereitgestellt wird, welches para-Alkylstyroleinheiten enthält, die keinen direkt gebundenen Halogenatomsubstituenten an dem ringgebundenen Kohlenstoffatom der para-Alkylgruppe aufweisen, und das Copolymer in Gegenwart von Halogen und Radikalinitiator halogeniert (vorzugsweise bromiert) wird, um halogeniertes Copolymer herzustellen, bei dem das ringgebundene Kohlenstoffatom der para-Alkylgruppe von mindestens einem Teil der para-Alkylstyroleinheiten direkt gebundenes Halogenatom (vorzugsweise Bromatom) als Substituent trägt und das Copolymer (ansonsten) im Wesentlichen frei von Ringhalogen oder beliebigem Halogen an der Polymergrundgerüstkette ist.

**32.** Verfahren nach Anspruch 31, bei dem der Radikalinitiator Licht und/oder Wärme umfasst.

**33.** Verfahren nach Anspruch 31 oder 32, bei dem der Radikalinitiator eine Halbwertzeit von 5 bis 2500 Minuten hat, vorzugsweise Bisazoverbindung und insbesondere eine solche Verbindung ausgewählt aus Azobisisobutyronitril, Azobis-(2,4-dimethylvalero)nitril, Azobis(2-methylbutyro)nitril und Mischungen derselben umfasst.

**34.** Verfahren nach einem der Ansprüche 31 bis 33, bei dem die Halogenierung beendet wird, bevor 60 % des para-Alkylstyrols halogeniert worden sind, wobei vorzugsweise die Halogenierung vor Erschöpfung des enthaltenen Halogens gequencht wird.

**35.** Verfahren nach einem der Ansprüche 21 bis 34, das zur Herstellung von Copolymer gemäß einem der Ansprüche 1 bis 20 angepasst ist.

## Revendications

**1.** Copolymère comprenant le produit de réaction directe d'une iso-oléfine ayant 4 à 7 atomes de carbone et d'un para-alkylstyrène, ledit copolymère étant **caractérisé en ce qu'**il a une distribution de composition substantiellement homogène, dans laquelle au moins 95 % en poids du copolymère ont une teneur en para-alkylstyrène dans

les limites de 10 % en poids de la teneur moyenne en para-alkylstyrène dudit copolymère

2. Copolymère suivant la revendication 1, dans lequel au moins 97 % en poids dudit copolymère ont une teneur en para-alkylstyrène dans la limite de 7 % en poids de la teneur moyenne en para-alkylstyrène dudit copolymère.

3. Copolymère suivant la revendication 1 ou 2, ayant un rapport $M_w/M_n$ inférieur à 6, de préférence inférieur à 4.

4. Copolymère suivant la revendication 3, ayant un rapport $M_w/M_n$ inférieur à 2,5 et notamment inférieur à 2,0.

5. Copolymère suivant l'une quelconque des revendications précédentes, dans lequel les courbes normalisées de différence d'indice de réfraction et d'absorption ultraviolette obtenues par chromatographie de perméation sur gel pour ledit copolymère sont pratiquement superposables.

6. Copolymère suivant l'une quelconque des revendications précédentes, qui a une valeur de $M_n$ d'au moins 25 000, de préférence supérieure à 50 000 et notamment supérieure à 100 000.

7. Copolymère suivant l'une quelconque des revendications 1 à 5, qui a une valeur de $M_n$ comprise dans l'intervalle de 500 à 25 000.

8. Copolymère suivant l'une quelconque des revendications précédentes, qui comprend 10 à 99,5 % en poids de motifs iso-oléfiniques et 0,5 à 90 % en poids des motifs para-alkylstyrène.

9. Copolymère suivant la revendication 8, qui comprend 80 à 99,5 % en poids des motifs iso-oléfiniques et 0,5 à 20 % en poids de motifs para-alkylstyrène.

10. Copolymère suivant l'une quelconque des revendications précédentes, dans lequel l'iso-oléfine comprend l'isobutylène et/ou dans lequel le para-alkylstyrène comprend le paraméthylstyrène.

11. Copolymère suivant l'une quelconque des revendications précédentes, qui comprend le para-alkylstyrène sous la forme

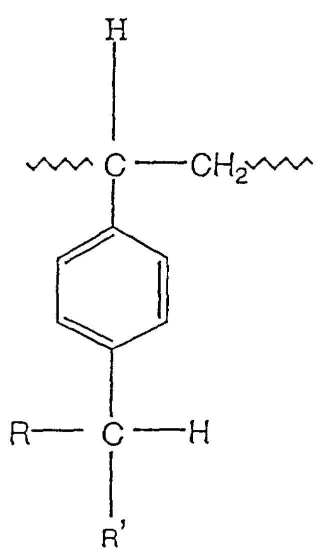

dans laquelle R et R' sont choisis indépendamment dans le groupe consistant en l'hydrogène, des groupes alkyle (de préférence en $C_1$ à $C_5$) et des halogénures d'alkyle (de préférence en $C_1$ à $C_5$) primaires et secondaires.

12. Copolymère suivant l'une quelconque des revendications précédentes, dans lequel l'atome de carbone lié au noyau du groupe para-alkyle d'au moins certains des motifs para-alkylstyrène porte un atome d'halogène lié directement comme substituant.

**13.** Copolymère suivant l'une quelconque des revendications précédentes, qui est pratiquement dépourvu de tout halogène sur le noyau ou de tout halogène sur la chaîne du squelette du polymère mais qui contient facultativement un halogène dans le groupe para-alkyle d'au moins certains des motifs para-alkylstyrène.

**14.** Copolymère suivant la revendication 12 ou 13, dans lequel le substituant halogéno lié directement sur l'atome de carbone, lié au noyau, du groupe para-alkyle est le brome.

**15.** Copolymère suivant l'une quelconque des revendications 12 à 14, qui comprend le para-alkylstyrène sous la forme

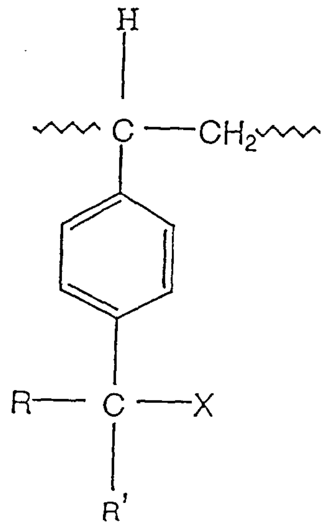

dans laquelle R et R' sont choisis indépendamment dans le groupe consistant en l'hydrogène, des groupes alkyle (de préférence en $C_1$ à $C_5$) et des halogénures d'alkyle (de préférence en $C_1$ à $C_5$) primaires et secondaires (R et R' représentant de préférence l'un et l'autre l'hydrogène) et dans laquelle X comprend un halogène ou un mélange d'un halogène et d'hydrogène.

**16.** Copolymère suivant l'une quelconque des revendications 12 à 15, dans lequel une quantité allant jusqu'à 60 % des motifs para-alkylstyrène comprend ceux ayant comme substituant un atome d'halogène lié directement, de préférence le brome, sur l'atome de carbone, lié au noyau, du groupe para-alkyle.

**17.** Copolymère suivant la revendication 6, **caractérisé en outre par** une ou plusieurs quelconques des caractéristiques définies dans n'importe quelle revendication (a) choisie entre les revendications 1 à 5 et 8 à 16, seules ou en association avec une ou plusieurs quelconques des caractéristiques définies dans une ou plusieurs autres quelconques des revendications 1 à 5 et 8 à 16 dont dépend la revendication (a).

**18.** Copolymère halogéné d'une iso-oléfine ayant 4 à 7 atomes de carbone et d'un para-alkylstyrène, **caractérisé en ce que** l'atome de carbone, lié au noyau, du groupe para-alkyle d'au moins certains des motifs para-alkylstyrène porte comme substituant un atome d'halogène lié directement, ledit copolymère étant (sinon) pratiquement dépourvu de tout halogène sur le noyau ou de tout halogène sur la chaîne du squelette du polymère.

**19.** Copolymère suivant la revendication 18, qui comprend le para-alkylstyrène sous la forme

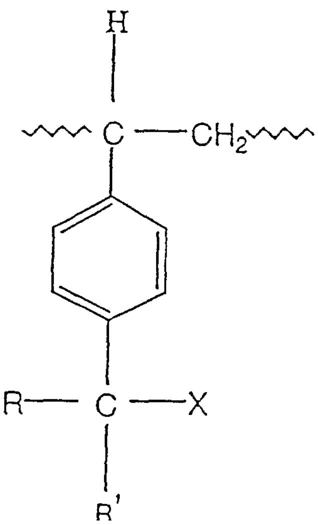

dans laquelle R et R' sont choisis indépendamment dans le groupe consistant en l'hydrogène, des groupes alkyle (de préférence en $C_1$ à $C_5$) et des halogénures d'alkyle (de préférence en $C_1$ à $C_5$) primaires et secondaires (R et R' représentant de préférence l'un et l'autre l'hydrogène) et dans laquelle X comprend le brome ou un mélange de brome et d'hydrogène (un tel mélange contenant de préférence jusqu'à 60 % en nombre de brome).

**20.** Copolymère suivant la revendication 18 ou 19, **caractérisé en outre par** une ou plusieurs quelconques des caractéristiques définies dans n'importe quelle revendication (b) choisie entre les revendications 1 à 11, 6 et 17, seules ou en association avec une ou plusieurs quelconques des caractéristiques définies dans une ou plusieurs autres quelconques des revendications 1 à 11, 6 et 17 dont dépend ladite revendication (b).

**21.** Procédé pour la production d'un copolymère d'une iso-oléfine ayant 4 à 7 atomes de carbone et d'un para-alkylstyrène, qui comprend les étapes consistant à mélanger le monomère iso-oléfinique et le monomère para-alkylstyrène ne portant pas comme substituant un atome d'halogène lié directement sur l'atome de carbone, lié au noyau, du groupe para-alkyle dans des conditions de copolymérisation en présence d'un diluant et d'un catalyseur du type acide de Lewis, et à maintenir le mélange de copolymérisation à l'état pratiquement dépourvu d'impuretés pouvant se complexer avec ledit catalyseur ou subir une copolymérisation avec ladite iso-oléfine ou ledit para-alkylstyrène.

**22.** Procédé suivant la revendication 21, dans lequel les conditions comprennent une température inférieure à 0°C.

**23.** Procédé suivant la revendication 21 ou 22, dans lequel le catalyseur comprend le dichlorure d'éthylaluminium, le chlorure de diéthylaluminium ou leurs mélanges.

**24.** Procédé suivant l'une quelconque des revendications 21 à 23, dans lequel le copolymère est insoluble dans le diluant, ce procédé étant un procédé de polymérisation en suspension, ou dans lequel le copolymère est soluble dans le diluant, ce procédé étant un procédé de polymérisation en solution.

**25.** Procédé suivant l'une quelconque des revendications 21 à 23, dans lequel le copolymère est seulement légèrement soluble dans le diluant et le diluant est suffisamment soluble dans le copolymère pour produire une seconde phase contenant pratiquement la totalité dudit copolymère, ce procédé étant un procédé de polymérisation en suspension de ciment.

**26.** Procédé suivant l'une quelconque des revendications 21 à 25, dans lequel le diluant est choisi entre des hydrocarbures aliphatiques, des hydrocarbures aromatiques, des hydrocarbures en $C_1$ à $C_6$ halogénés et des mélanges de deux ou plus de deux quelconques d'entre eux.

**27.** Procédé suivant l'une quelconque des revendications 21 à 26, dans lequel le monomère isobutylène ne contient pas plus de 0,5 % en poids des impuretés.

**28.** Procédé suivant l'une quelconque des revendications 21 à 27, dans lequel le para-alkylstyrène ne contient pas

plus de 5 % en poids, avantageusement pas plus de 2,5 % en poids et de préférence pas plus de 0,5 % en poids des impuretés.

**29.** Procédé suivant l'une quelconque des revendications 21 à 28, dans lequel le diluant contient une quantité non supérieure à 1 % en poids, de préférence non supérieure à 0,2 % en poids des impuretés.

**30.** Procédé suivant l'une quelconque des revendications 21 à 29, comprenant ensuite l'halogénation du copolymère, facultativement par initiation photochimique, de préférence par irradiation avec de la lumière dudit copolymère en présence d'un halogène ou en mettant en contact ledit copolymère avec un halogène en présence d'un initiateur radicalaire.

**31.** Procédé pour halogéner (de préférence bromer) sélectivement un copolymère d'une iso-oléfine et d'un para-alkylstyrène, qui comprend les étapes consistant à prendre un copolymère suivant l'une quelconque des revendications 1 à 11 ou produit par le procédé suivant l'une quelconque des revendications 21 à 30 qui contient des motifs para-alkylstyrène n'ayant pas comme substituant d'atome d'halogène lié directement sur l'atome de carbone, lié au noyau, du groupe para-alkyle, et à halogéner (de préférence bromer) ledit copolymère en présence d'un halogène et d'un initiateur radicalaire de manière à produire un copolymère halogéné, dans lequel l'atome de carbone, lié au noyau, du groupe para-alkyle d'au moins certains des motifs para-alkylstyrène porte un atome d'halogène (de préférence de brome) lié directement comme substituant, ledit copolymère étant (sinon) pratiquement dépourvu d'halogène sur le noyau ou de tout halogène sur la chaîne du squelette du polymère.

**32.** Procédé suivant la revendication 31, dans lequel l'initiateur radicalaire comprend la lumière et/ou la chaleur.

**33.** Procédé suivant la revendication 31 ou 32, dans lequel l'initiateur radicalaire a une demi-vie de 5 à 2500 minutes, et comprend de préférence un composé bis-azoïque, notamment un tel composé choisi entre l'azo-bis-isobutyronitrile, l'azo-bis-(2,4-diméthylvaléro)nitrile, l'azo-bis-(2-méthylbutyro)nitrile et leurs mélanges.

**34.** Procédé suivant l'une quelconque des revendications 31 à 33, dans lequel l'halogénation est interrompue avant l'halogénation de 60 % du para-alkylstyrène, de préférence par désactivation de l'halogénation avant l'épuisement de l'halogène se trouvant dans le mélange.

**35.** Procédé suivant l'une quelconque des revendications 21 à 34, apte à produire un copolymère suivant l'une quelconque des revendications 1 à 20.

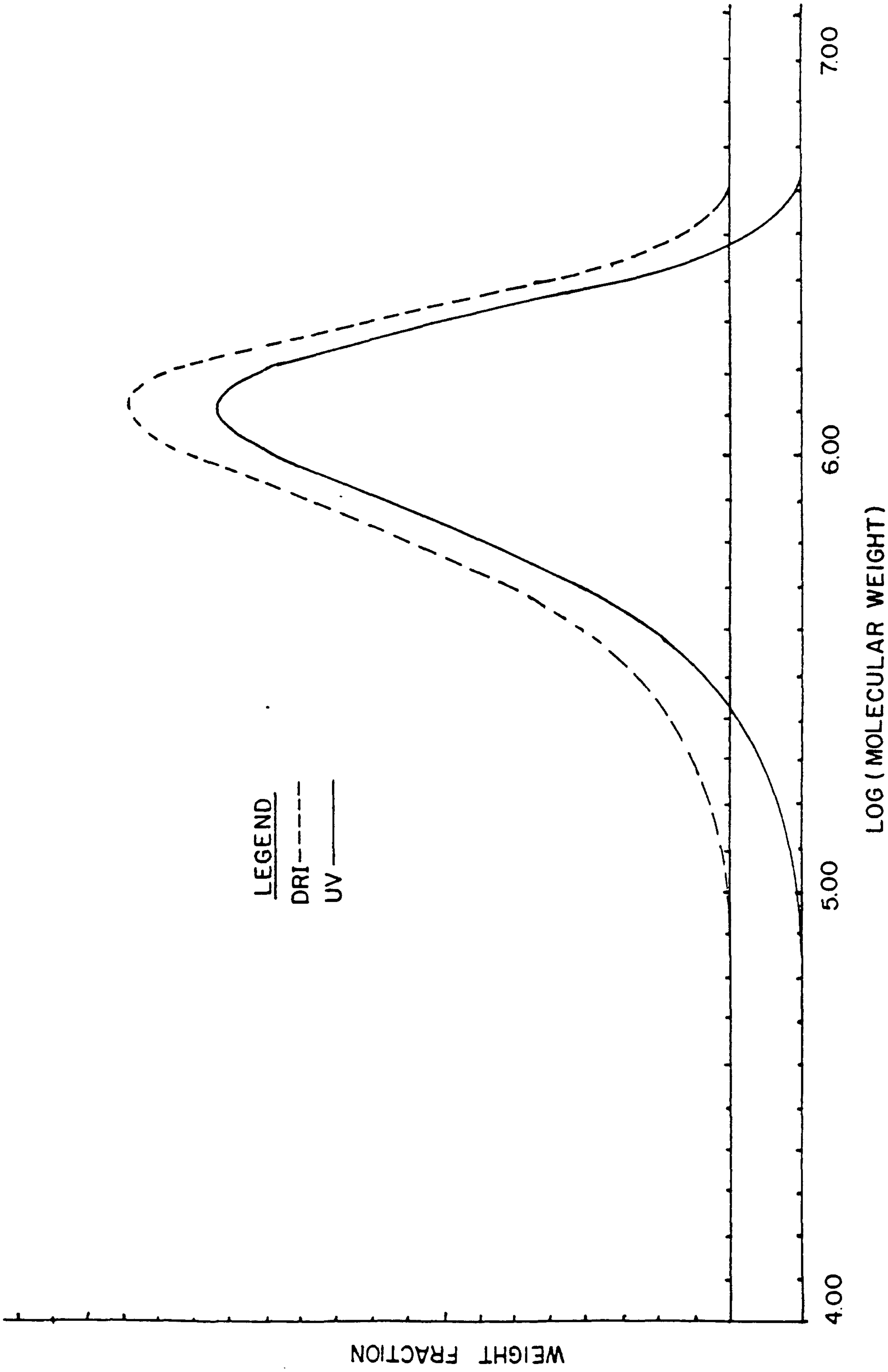
LEGEND
DRI
UV
4.00
5.00
6.00
7.00
LOG ( MOLECULAR WEIGHT )
WEIGHT FRACTION

FIGURE